# EUROPEAN PATENT APPLICATION

(11) **EP 4 224 784 A1**
(43) Date of publication of application: **09.08.2023**
(21) Application number: 20956342.8
(22) Date of filing: 02.10.2020
(51) Int. Cl.: H04L 9/32

(54) **CONTROL METHOD, CONTROL PROGRAM, AND INFORMATION PROCESSING DEVICE**

(71) Applicant: FUJITSU LIMITED, Kawasaki-shi, Kanagawa 211-8588 (JP)
(72) Inventor: NAKAMURA, Yosuke, Kawasaki-shi, Kanagawa 211-8588 (JP); KOJIMA, Rikuhiro, Kawasaki-shi, Kanagawa 211-8588 (JP); TSUNODA, Tadanobu, Kawasaki-shi, Kanagawa 211-8588 (JP); YASAKI, Koichi, Kawasaki-shi, Kanagawa 211-8588 (JP); YAMAMOTO, Dai, Kawasaki-shi, Kanagawa 211-8588 (JP); NIMURA, Kazuaki, Kawasaki-shi, Kanagawa 211-8588 (JP)
(74) Representative: Hoffmann Eitle
(86) International application number: PCT/JP2020/037596
(87) International publication number: WO 2022/070414

(57) **Abstract**

Processing is appropriately executed on data stored in a cloud service.

An information processing device (10) detects a first data operation for a cloud service (31) executed by an information processing system (30) and notifies an information processing device (20) of content of the first data operation. The information processing device (20) determines first processing on data (D1) that is a target of the first data operation based on the notified content of the first data operation and instructs the information processing device (20) to execute the first processing. When instructed to execute the first processing, the information processing device (10) executes the first processing on the data (D1).

## Description

### FIELD

The present invention relates to a control method, a control program, and an information processing device.

### BACKGROUND

Currently, various services provided by a cloud computing environment are used. The service provided by the cloud computing environment may be referred to as a cloud service. For example, a system for providing a cloud-based storage service that is a cloud service for storing or managing data has been proposed.

### CITATION LIST

### [PATENT DOCUMENT]

Patent Document 1: Japanese Laid-open Patent Publication No. 2012-138078

### SUMMARY OF INVENTION

### [TECHNICAL PROBLEM]

As described above, there is a case where data is stored in a storage region provided by the cloud service. By the way, there is a case where predetermined processing, for example, adding an electronic signature or the like, is executed on the data stored in the cloud service.

In this case, for example, a user performs a series of operations, with an information processing device, for moving data from a cloud service that stores the data to the information processing device, causing the information processing device to execute predetermined processing, and storing data after the execution in the cloud service again. However, if the number of operation procedures of the user is large, this imposes an excessive operation load on the user. Therefore, there is a possibility that processing that should be executed on the data is omitted by the user.

In one aspect, an object of the present invention is to provide a control method, a control program, and an information processing device that appropriately execute processing on data stored in a cloud service.

### [SOLUTION TO PROBLEM]

In one mode, a control method is provided. With this control method, when an information processing system that provides a data management function is used, software that operates in a first information processing device executes processing for detecting operation information for the first information processing device by a user from the first information processing device operated by the user, the detected operation information is notified to a second information processing device that relays between the first information processing device and the information processing system and adds a digital signature to data, and the first information processing device and the second information processing device execute processing for automatically adding a signature to the data in cooperation.

Furthermore, in one mode, a control method is provided. With this control method, the first information processing device detects a first data operation for a cloud service executed by the information processing system and notifies the second information processing device of content of the first data operation, the second information processing device determines first processing on data that is a target of the first data operation based on the notified content of the first data operation and instructs the first information processing device to execute the first processing, and the first information processing device executes the first processing on the data when instructed to execute the first processing.

Furthermore, in one mode, a control program is provided.

Furthermore, in one mode, an information processing device is provided.

According to an aspect of the embodiments, a control method to execute a process includes when using an information processing system that provides data operation function by a first information processing device controlled by a user, detecting operation information by the user to the first information processing device by software that operates in the information processing system; notifying the detected operation information to a second information processing device that intermediates between the first information processing device and the information processing system, and applies a digital signature to data; applying automatically a digital signature to the data cooperated by the first information processing device and the second information processing device.

### [ADVANTAGEOUS EFFECTS OF INVENTION]

In one aspect, it is possible to appropriately execute processing on data stored in a cloud service.

The above-described object and other objects, features, and advantages of the present invention will become clear from the following description related to the accompanying drawings, which illustrate preferred embodiments as examples of the present invention.

### BRIEF DESCRIPTION OF DRAWINGS

FIG. 1 is a diagram for explaining an information processing device according to a first embodiment;
FIG. 2 is a diagram illustrating a coupling example of devices according to a second embodiment;
FIG. 3 is a diagram illustrating an example of cooperation between a client device and a control server;
FIG. 4 is a diagram illustrating a hardware example of the control server;
FIG. 5 is a diagram illustrating a functional example of the control server;
FIG. 6 is a diagram illustrating a functional example of the client device;
FIG. 7 is a diagram illustrating a functional example of an aggregation signature execution server;
FIG. 8 is a diagram illustrating a functional example of a cloud system;
FIG. 9 is a diagram illustrating an example of an action DB;
FIG. 10 is a diagram illustrating an example of a signature history table;
FIG. 11 is a diagram illustrating an example of a signature setting table;
FIG. 12 is a diagram illustrating an example of a signature key table;
FIG. 13 is a diagram illustrating an example of an adapter table;
FIG. 14 is a diagram illustrating an example of a data usage policy;
FIG. 15 is a diagram illustrating an example of action determination;
FIG. 16 is a diagram illustrating an example of TaaS screen insertion;
FIG. 17 is a diagram illustrating an example of adding an electronic signature;
FIG. 18 is a diagram illustrating an example of a signature history record;
FIG. 19 is a diagram illustrating an example of signature status confirmation;
FIG. 20 is a diagram illustrating an example of signature control;
FIG. 21 is a diagram illustrating the example of the signature control (continued);
FIG. 22 is a diagram illustrating an update example of the adapter table;
FIG. 23 is a diagram illustrating an example of user management with a private key;
FIG. 24 is a diagram illustrating an example of data movement according to policy evaluation;
FIG. 25 is a diagram illustrating an example of a notification according to a policy setting change;
FIG. 26 is a flowchart illustrating a processing example (part 1) for a data operation;
FIG. 27 is a flowchart illustrating an example of workflow processing;
FIG. 28 is a flowchart illustrating the processing example (part 2) for the data operation; and
FIG. 29 is a flowchart illustrating a processing example for a policy setting change.

### DESCRIPTION OF EMBODIMENTS

Hereinafter, the present embodiments will be described with reference to the drawings.

### [First Embodiment]

A first embodiment will be described.

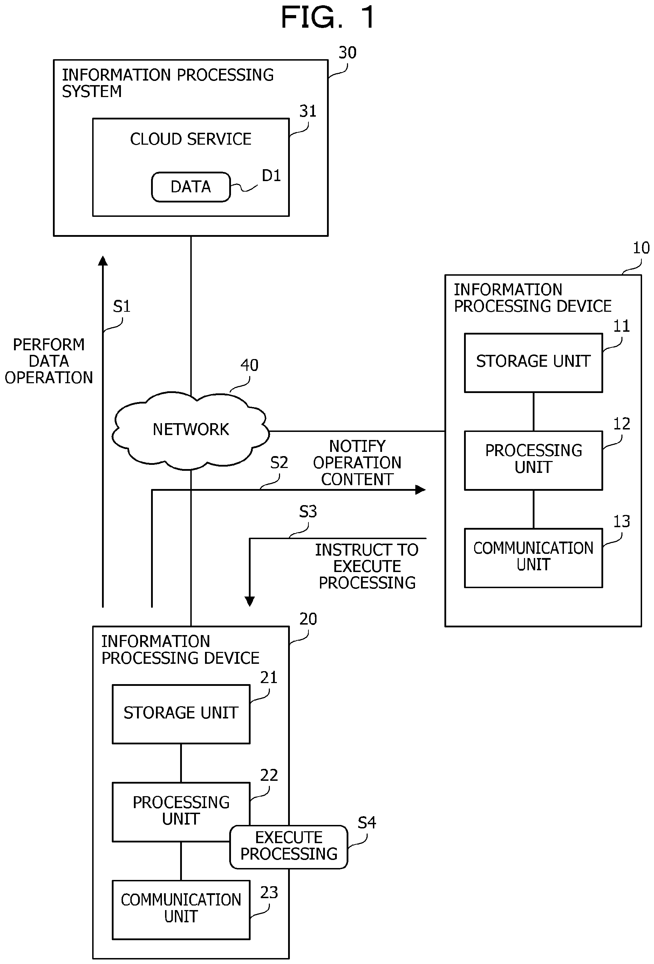

FIG. 1 is a diagram for explaining an information processing device according to a first embodiment.

An information processing device 10 controls processing to be executed by an information processing device 20. The information processing device 20 is operated by a user. An information processing system 30 executes a cloud service 31. The cloud service 31 provides a storage region where data of the user is saved.

The information processing system 30 may be realized by one or more information processing devices. Furthermore, as the storage region provided by the information processing system 30, a storage region of a storage included in the information processing system 30 is used.

The information processing devices 10 and 20 and the information processing system 30 are coupled to a network 40. The network 40 is, for example, the Internet.

The information processing device 10 includes a storage unit 11, a processing unit 12, and a communication unit 13. The information processing device 20 includes a storage unit 21, a processing unit 22, and a communication unit 23. The storage units 11 and 21 may be volatile storage devices such as a random access memory (RAM), or may be nonvolatile storage devices such as a hard disk drive (HDD) or a flash memory. The processing units 12 and 22 may include a central processing unit (CPU), a digital signal processor (DSP), an application specific integrated circuit (ASIC), a field programmable gate array (FPGA), or the like. The processing units 12 and 22 may be processors that execute programs. The "processor" may include a group of a plurality of processors (multiprocessor).

The communication units 13 and 23 are realized by a network interface card (NIC) or the like. Transmission and reception of data by the information processing devices 10 and 20 described below via the network 40 are performed via the communication units 13 and 23.

The information processing devices 10 and 20 execute the following processing.

The processing unit 22 performs a first data operation on the cloud service 31 in response to a user's operation input (step S1). The first data operation is a data operation performed in response to the user's operation input. The first data operation is, for example, an operation for storing data D1 in a specific storage destination folder in the storage region provided by the cloud service 31. Note that the folder may be referred to as a directory.

The processing unit 22 detects the first data operation and notifies the information processing device 10 of content of the first data operation (step S2). The content of the first data operation includes, for example, information regarding the storage destination folder of the data D1 in the cloud service 31. The content of the first data operation may include information regarding an attribute of the data D1. For example, in a case where the data D1 is document data, a written notification, an application, a contract, or the like can be considered as the attributes of the data D1. Furthermore, the content of the first data operation may include information regarding the user who has performed the operation input.

The processing unit 12 determines first processing on the data D1 that is a target of the first data operation, based on the notified content of the first data operation. For example, the processing unit 12 determines the first processing, according to the storage destination folder of the data D1 and the attribute of the data D1 that is the target of the first data operation. More specifically, the storage unit 11 may store management information that indicates a correspondence relationship between processing to be executed and the information regarding the data storage destination and the attribute of the data. The processing unit 12 may determine the first processing by selecting the first processing corresponding to the content of the first data operation, based on the management information.

The first processing may be, for example, processing for adding an electronic signature with a private key of the user to the data D1. The electronic signature is signature data used to verify validity of data based on the technology of public key infrastructure (PKI). More specifically, the electronic signature for the data D1 is data obtained by encrypting a hash value of information based on the data D1 with the private key of the user or the like. The electronic signature may be referred to as a digital signature. For example, in a case where the content of the first data operation indicates that the data D1 that has a predetermined attribute such as a contract is stored in a folder for approval with a workflow, the processing unit 12 may determine the processing for adding the electronic signature to the data D1 as the first processing.

Furthermore, for example, the first processing may be processing for moving or copying the data D1 from the cloud service 31 to another cloud service executed by another information processing system (not illustrated). For example, in a case where the content of the first data operation indicates that the data D1 is stored in a data sharing folder, the processing unit 12 may determine the processing for moving or copying the data D1 to the another cloud service as the first processing. Information indicating another cloud service that is a moving destination or a copy destination in a case where movement or copy is performed or a storage destination folder in the another cloud service is stored, for example, in the storage unit 11 in advance.

The processing unit 12 instructs the information processing device 20 to execute the first processing (step S3).

When instructed to execute the first processing, the processing unit 22 executes the first processing on the data D1 (step S4).

For example, in a case where the processing unit 22 is instructed to execute the processing for adding the electronic signature as the first processing, the processing unit 22 acquires the data D1 from an approval folder of the cloud service 31 and adds the electronic signature to the data D1 using the private key of the user who has performed the operation input related to the first data operation. The processing unit 22 stores the data D1 to which the electronic signature is added in the approval folder of the cloud service 31. Note that the processing unit 22 may cause a display device coupled to the information processing device 20 to display a screen that receives an input to start to add the electronic signature by the user. When receiving the input to start to add the electronic signature by the user on the screen, the processing unit 22 may acquire the data D1 from the cloud service 31 and may add the electronic signature.

Furthermore, in a case where the processing unit 22 is instructed to execute the processing for moving or copying the data D1 to the another cloud service as the first processing, the processing unit 22 acquires the data D1 from the data sharing folder of the cloud service 31. The processing unit 22 stores the data D1 in another cloud service designated by the information processing device 10 and a storage destination folder of the another cloud service. Note that authentication information used to access the cloud service 31 or the another cloud service is stored in the storage unit 21 in advance.

In this way, the first data operation on the cloud service 31 executed by the information processing system 30 is detected by the information processing device 20. The content of the first data operation is notified to the information processing device 10 by the information processing device 20. The first processing for the data D1 that is the target of the first data operation is determined by the information processing device 10, based on the notified content of the first data operation. The execution of the first processing is instructed to the information processing device 20 by the information processing device 10. The first processing is executed on the data D1 according to the instruction to execute the first processing, by the information processing device 20.

As a result, it is possible to appropriately execute processing on data stored in the cloud service.

Here, as described above, predetermined processing, for example, adding an electronic signature, moving or copying the data D1 to the another cloud service, or the like may be executed on the data D1 stored in the cloud service 31.

In this case, for example, the user performs a series of operations such as moving data from the cloud service 31 that stores the data D1 to the information processing device 20, executing processing such as adding the electronic signature by the information processing device 20, and storing the data after the execution in the cloud service 31 again. Alternatively, in a case where the data D1 is moved or copied to another cloud service, the user performs a series of operations for logging in the another cloud service that is a moving destination or a copy destination of the data D1, selecting a storage destination folder, and storing the data D1 in the folder.

However, if the number of operation procedures of the user is large in this way, this imposes an excessive operation load on the user. Therefore, there is a possibility that processing that should be executed on data is omitted by the user or the processing is not appropriately executed. Furthermore, efficiency in the use of the cloud service 31 and the other cloud services by the user is not sufficiently enhanced.

Therefore, the information processing device 10 causes the information processing device 20 to execute the processing that should be executed on the data D1, according to the content of the data operation on the data D1 stored in the cloud service 31, received from the information processing device 20. As a result, the processing that should be executed on the data D1 can be appropriately executed by the information processing device 20 without depending on a user's operation. Furthermore, it is possible to reduce the number of user's operation procedures associated with the execution of the processing and to reduce the user's operation load.

Furthermore, when the processing such as signature addition is executed, it is not necessary to transfer the data D1 to a control server 100, and the information processing device 20 side can execute the processing. Therefore, security of the data D1 can be enhanced. In this way, the cloud service 31 can be efficiently and safely used.

Furthermore, for example, when the information processing system 30 that provides a data management function is used, software that operates in the information processing device 20 detects operation information for the information processing device 20 by the user from the information processing device 20 operated by the user, the detected operation information is notified to the information processing device 10 that relays between the information processing device 20 and the information processing system 30 and adds a digital signature to the data D1, and the information processing device 20 and the information processing device 10 may execute processing for automatically adding a signature to the data D1 in cooperation.

As a result, it is possible to appropriately execute the processing for adding the digital signature to the data D1 stored in the information processing system 30.

In the following, functions realized by the information processing devices 10 and 20 will be described in more detail by exemplifying a more specific system.

### [Second Embodiment]

Next, a second embodiment will be described.

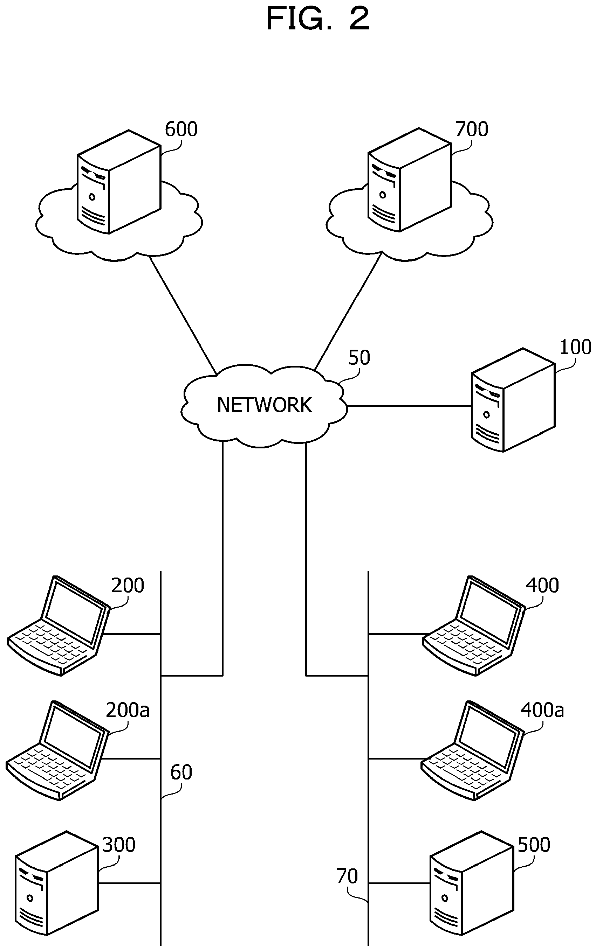

FIG. 2 is a diagram illustrating a coupling example of devices according to the second embodiment.

An overall system of the second embodiment includes a control server 100, client devices 200, 200a, 400, and 400a, aggregation signature execution servers 300 and 500, and cloud systems 600 and 700.

The control server 100 and the cloud systems 600 and 700 are coupled to a network 50. The network 50 is, for example, the Internet.

Here, the cloud systems 600 and 700 are information processing systems that provide a cloud service via the network 50. The cloud service executed by the cloud systems 600 and 700 includes a cloud-based storage service. The cloud systems 600 and 700 include a storage and provide a storage region of the storage to a client computer via the network 50. The storage provided by the cloud service in this way may be referred to as a cloud storage. The cloud systems 600 and 700 may be operated by providers different from each other.

The client devices 200 and 200a and the aggregation signature execution server 300 are coupled to a network 60. The client devices 400 and 400a and the aggregation signature execution server 500 are coupled to a network 70. The networks 60 and 70 are, for example, local area networks (LAN) provided in an organization such as a company. The networks 60 and 70 are networks belonging to organizations different from each other.

The control server 100 is a server computer that assists data exchange between the organizations via the cloud systems 600 and 700. When the data is exchanged between the organizations, it is important that validity of data to be exchanged is guaranteed. Therefore, the control server 100 provides a function for assisting guaranteeing validity of data to be stored in the cloud systems 600 and 700. A service for assisting guaranteeing the validity of the data may be referred to as a trust as a service (TaaS). The control server 100 is an example of the information processing device 10 according to the first embodiment.

The client devices 200 and 200a are client computers such as a personal computer (PC) operated by a user. The client devices 200 and 200a add electronic signatures to the data to be stored in the cloud systems 600 and 700, move or copy data from a cloud service used by an organization to which the user belongs to another cloud service used by another organization, or the like. As a user's personal electronic signature for data, a private key of the user is used.

The aggregation signature execution server 300 is a server computer used to add an aggregation signature to data. The aggregation signature is an electronic signature obtained by aggregating electronic signatures with private keys of multiple individual users. As an aggregation signature, an aggregation signature key generated based on the plurality of private keys of the plurality of users is used. With the aggregation signature, it is possible to verify that the data is created by the plurality of users.

The client devices 400 and 400a are client computers having functions similar to those of the client devices 200 and 200a. Note that each of the client devices 200, 200a, 400, and 400a is an example of the information processing device 20 according to the first embodiment. The aggregation signature execution server 500 is a server computer that has functions similar to those of the aggregation signature execution server 300.

The cloud systems 600 and 700 execute the cloud service as described above. Each of the cloud systems 600 and 700 is an example of the information processing system 30 according to the first embodiment. For example, each of the cloud systems 600 and 700 includes a plurality of server computers and a plurality of storage devices. Each of the cloud systems 600 and 700 executes the cloud service using resources of the plurality of server computers or resources of the plurality of storage devices.

For example, the control server 100 and the cloud systems 600 and 700 function as Web servers. Furthermore, the client devices 200, 200a, 400, and 400a function as Web browsers. For example, a user of the client devices 200, 200a, 400, and 400a can operate the Web browser and use graphical user interfaces (GUI) provided by the Web servers executed by the control server 100 and the cloud systems 600 and 700.

The cloud service provided by the cloud system 600 is used by an organization to which the client devices 200 and 200a and the aggregation signature execution server 300 belong. The cloud service provided by the cloud system 700 is used by an organization to which the client devices 400 and 400a and the aggregation signature execution server 500 belong.

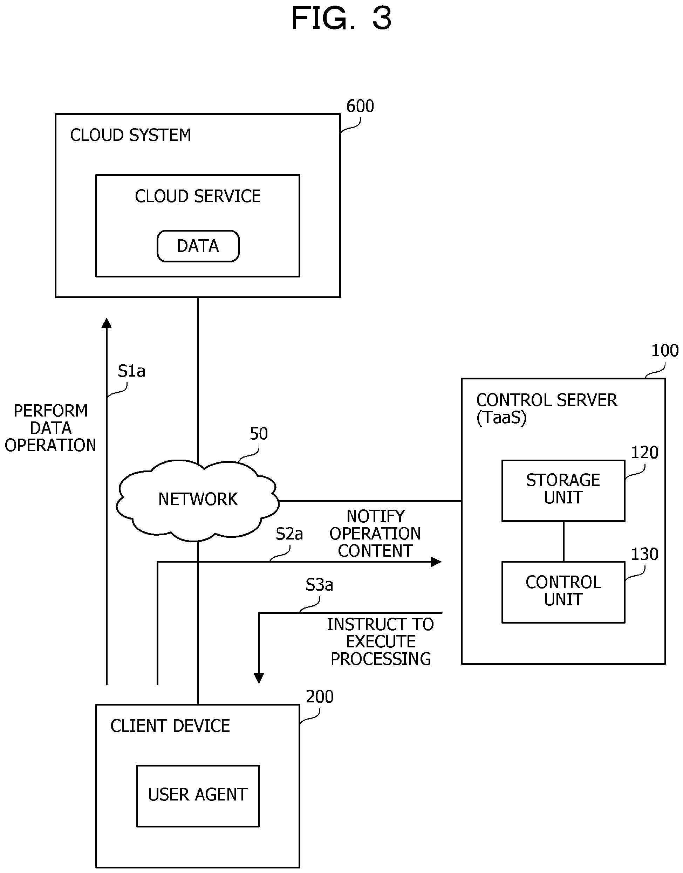

FIG. 3 is a diagram illustrating an example of cooperation between the client device and the control server.

In FIG. 3, the client device 200 is illustrated as an example. However, the client devices 200a, 400, and 400a and the aggregation signature execution servers 300 and 500 cooperate with the control server 100, similarly to the client device 200.

The client device 200 executes a user agent that cooperates with the control server 100. Furthermore, the control server 100 includes a storage unit 120 and a control unit 130. Details of functions of the storage unit 120 and the control unit 130 will be described later.

The client device 200 and the control server 100 execute the following processing.

The client device 200 detects a first data operation on the cloud service executed by the cloud system 600 (step S1a).

The client device 200 notifies the control server 100 of content of the first data operation (step S2a).

The detection of the first data operation in step S1a and the notification in step S2a are executed by the user agent of the client device 200.

The control server 100 determines first processing for target data of the first data operation based on the notified content of the first data operation and instructs the client device 200 to execute the first processing (step S3a). Step S3a is executed by the control unit 130 of the control server 100.

When being instructed to execute the first processing, the client device 200 executes the first processing on the data stored in the cloud service of the cloud system 600. The first processing may be executed by the user agent of the client device 200 or may be executed by a predetermined software function of the client device 200 called by the user agent.

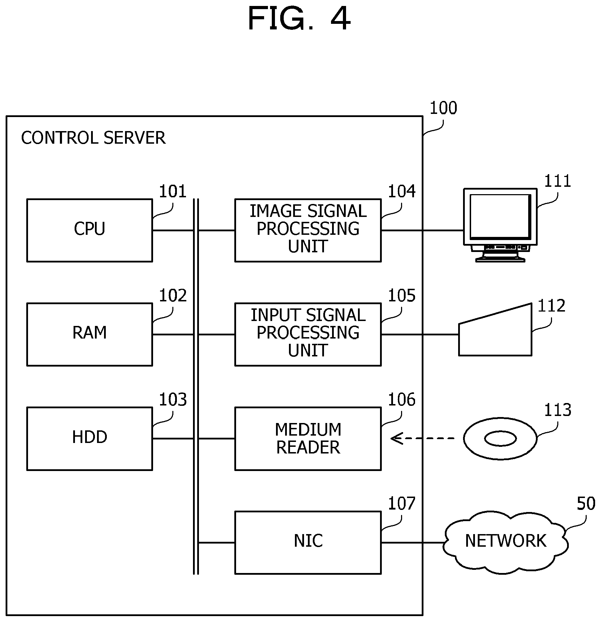

FIG. 4 is a diagram illustrating a hardware example of the control server.

The control server 100 includes a CPU 101, a RAM 102, an HDD 103, an image signal processing unit 104, an input signal processing unit 105, a medium reader 106, and an NIC 107. Note that the CPU 101 is an example of the processing unit 12 according to the first embodiment. The RAM 102 or the HDD 103 is an example of the storage unit 11 according to the first embodiment. The NIC 107 is an example of the communication unit 13 according to the first embodiment.

The CPU 101 is a processor that executes program commands. The CPU 101 loads at least a part of a program and data stored in the HDD 103 into the RAM 102 and executes the program. Note that the CPU 101 may include a plurality of processor cores. Furthermore, the control server 100 may include a plurality of processors. The processing to be described below may be executed in parallel using a plurality of processors or processor cores. In addition, a set of the plurality of processors may be referred to as a "multiprocessor" or simply a "processor".

The RAM 102 is a volatile semiconductor memory that temporarily stores the program executed by the CPU 101 and data used by the CPU 101 for arithmetic operations. Note that the control server 100 may include any type of memory other than the RAM and may include a plurality of memories.

The HDD 103 is a nonvolatile storage device that stores software programs such as an operating system (OS), middleware, and application software, and data. Note that the control server 100 may include another type of storage device such as a flash memory or a solid state drive (SSD), and may include a plurality of nonvolatile storage devices.

The image signal processing unit 104 outputs an image to a display 111 coupled to the control server 100 in accordance with a command from the CPU 101. As the display 111, any type of display such as a cathode ray tube (CRT) display, a liquid crystal display (LCD), a plasma display, or an organic electro-luminescence (OEL) display may be used.

The input signal processing unit 105 acquires an input signal from an input device 112 coupled to the control server 100 and outputs the input signal to the CPU 101. As the input device 112, a pointing device such as a mouse, a touch panel, a touch pad, or a trackball, a keyboard, a remote controller, a button switch, or the like may be used. Furthermore, a plurality of types of input devices may be coupled to the control server 100.

The medium reader 106 is a reading device that reads programs and data recorded in a recording medium 113. As the recording medium 113, for example, a magnetic disk, an optical disk, a magneto-optical (MO) disk, a semiconductor memory, or the like can be used. The magnetic disk includes a flexible disk (FD) and an HDD. The optical disk includes a compact disc (CD) and a digital versatile disc (DVD).

The medium reader 106 copies, for example, the program and data read from the recording medium 113 to another recording medium such as the RAM 102 or the HDD 103. The read program is executed by the CPU 101, for example. Note that the recording medium 113 may be a portable recording medium, and may be used to distribute the program and data. Furthermore, the recording medium 113 and the HDD 103 may be referred to as computer-readable recording media.

The NIC 107 is an interface that is coupled to the network 50 and communicates with another computer through the network 50. The NIC 107 is coupled to a communication device such as a switch or a router with a cable, for example.

The server computers used for the client devices 200, 300a, 400, and 400a, the aggregation signature execution servers 300 and 500, and the cloud systems 600 and 700 are realized by hardware similar to that of the control server 100.

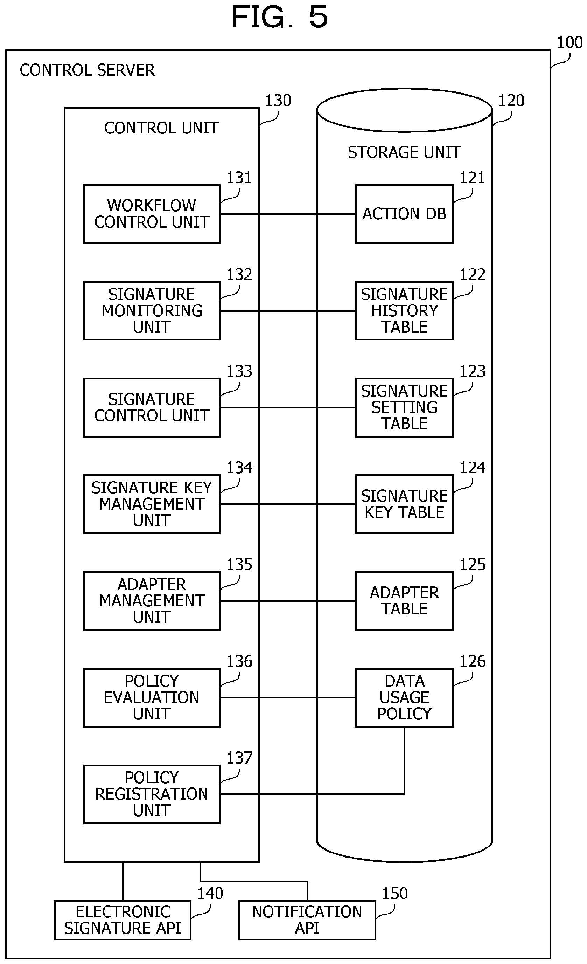

FIG. 5 is a diagram illustrating a functional example of the control server.

The control server 100 includes the storage unit 120, the control unit 130, an electronic signature application programming interface (API) 140, and a notification API 150. A storage region of the RAM 102 or the HDD 103 is used as the storage unit 120. The control unit 130, the electronic signature API 140, and the notification API 150 are realized by executing a program stored in the RAM 102 by the CPU 101.

The storage unit 120 stores various types of data used for processing of the control unit 130. The data stored in the storage unit 120 includes an action database (DB) 121, a signature history table 122, a signature setting table 123, a signature key table 124, an adapter table 125, and a data usage policy 126.

The action DB 121 is management information that holds a correspondence relationship between content of a data operation for the cloud service and processing to be executed by the client device.

The signature history table 122 is signature history information that holds an electronic signature addition history by the client device or an aggregation signature addition server to data in the cloud service.

The signature setting table 123 is signature setting information that holds a signature format in a case where the client device is caused to execute electronic signature addition processing to the content of the data operation.

The signature key table 124 is private key management information that holds a private key used for an electronic signature on data with respect to user identification information in the cloud service.

The adapter table 125 is adapter information that holds protocol information used for authentication with the cloud service by an agent in the client device that cooperates with the control server 100.

The data usage policy 126 is authority information used to manage a policy set to a folder in a cloud storage provided by the cloud service. To the folder in the cloud storage, information regarding a user who can access the folder is set as a policy. To the data usage policy 126, the policy set to the cloud storage is acquired from the cloud systems 600 and 700 and set. Note that the folder may be referred to as a directory.

The control unit 130 controls overall processing in the control server 100. The control unit 130 includes a workflow control unit 131, a signature monitoring unit 132, a signature control unit 133, a signature key management unit 134, an adapter management unit 135, a policy evaluation unit 136, and a policy registration unit 137.

When acquiring content of a user's data operation on the cloud service from the client device, the workflow control unit 131 determines processing to be executed by the client device, based on the content of the data operation and the action DB 121. For example, the workflow control unit 131 instructs the client device to add an electronic signature to the data or instructs the client device to move or copy the data to another cloud service.

Here, moving the data means that data in a moving source is arranged in a moving destination and the data in the moving source is deleted. Furthermore, copying the data means that the data in the moving source is arranged to the moving destination and the data in the moving source is left. In the following description, moving the data will be mainly described. However, a case where the data is copied, similar processing is executed.

Furthermore, the workflow control unit 131 controls a process of a workflow based on the data stored in the cloud service. For example, the instruction to add the electronic signature described above is issued along with start of the workflow.

The signature monitoring unit 132 monitors a status where an electronic signature is added to data by the client device. When completion of the electronic signature addition is reported from the client device, the signature monitoring unit 132 records a history of the electronic signature addition to the signature history table 122. The signature history table 122 is used to confirm that the electronic signature is appropriately added to the data.

In a case where the client device is instructed to add an electronic signature, the signature control unit 133 determines a signature format, based on the content of the user's data operation that is a trigger of the instruction and the signature setting table 123 and provides the signature format to the workflow control unit 131.

The signature key management unit 134 generates a key pair of a private key and a public key for each user and manages the private key in the signature key table 124 for each user. In the signature key table 124, the user identification information in the cloud service and identification information of the private key are associated with each other, the user is centrally managed across the plurality of cloud services, using the identification information of the private key.

The signature key management unit 134 may function as a certification authority. In other words, the signature key management unit 134 may generate an electronic certificate of a user by signing the public key of the user with a private key of the control server 100 and distribute the electronic certificate to the client device used by the user.

The adapter management unit 135 manages information regarding an authentication protocol with each cloud service of the agent of the client device or the aggregation signature execution server. For example, at the time of addition of an accessible cloud service and change of an authentication protocol of an existing cloud service, the adapter management unit 135 updates information regarding the authentication protocol used by the agent, based on the adapter table 125.

When data is moved between the cloud services according to the content of the data operation by the user, the policy evaluation unit 136 evaluates whether or not a policy of a folder that is a data storage candidate in a moving destination cloud service matches a policy designated by the user. The evaluation by the policy evaluation unit 136 is performed based on the data usage policy 126. An evaluation result by the policy evaluation unit 136 is used to determine whether or not the data movement is permitted by the workflow control unit 131.

The policy registration unit 137 receives registration of the policy that is permitted for the moving destination candidate folder at the time of data movement by the user and registers the policy to the data usage policy 126.

The electronic signature API 140 receives the report indicating that the electronic signature addition has been completed from the client device or the aggregation signature execution server and notifies the control unit 130 of the report. The notification is used to record a signature history by the signature monitoring unit 132 or the like.

The notification API 150 receives a notification indicating that a policy of a folder in the cloud service has been changed and notifies the control unit 130 of the notification. The notification is used as a trigger of re-evaluation of a policy of a data movement destination folder by the policy evaluation unit 136 or the like.

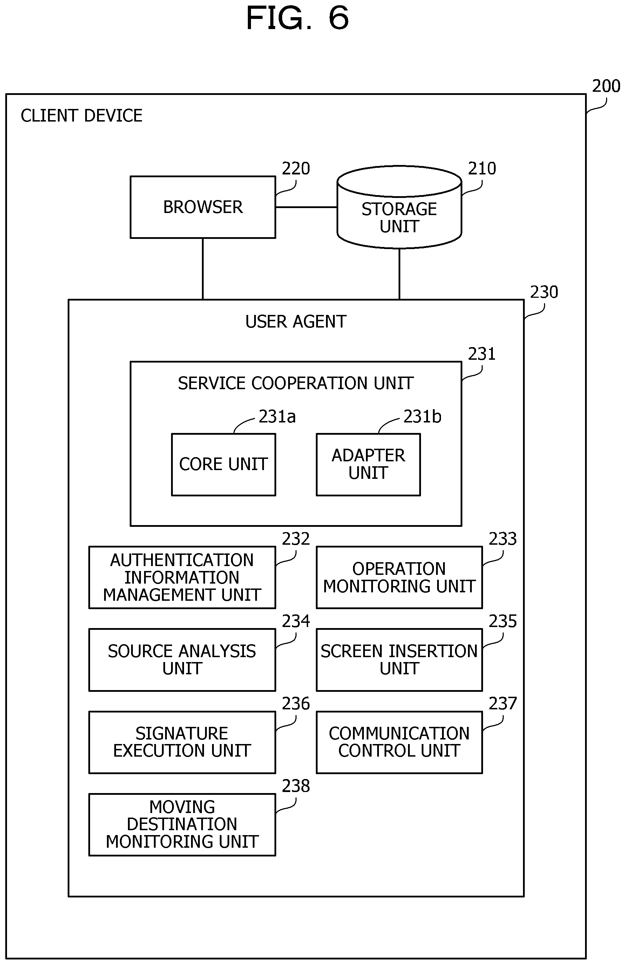

FIG. 6 is a diagram illustrating a functional example of the client device.

The client device 200 includes a storage unit 210, a browser 220, a user agent 230. As the storage unit 210, a storage region of a RAM, an HDD, or the like included in the client device 200 is used. The browser 220 and the user agent 230 are realized by executing a program stored in the RAM included in the client device 200 by a CPU included in the client device 200.

The storage unit 210 stores data used for processing of the browser 220 and the user agent 230.

The browser 220 is a Web browser and displays a GUI that is provided by the cloud service or the control server 100 on a display device of the client device 200.

The user agent 230 is an agent that cooperates with the cloud systems 600 and 700 and the control server 100. The user agent 230 includes a service cooperation unit 231, an authentication information management unit 232, an operation monitoring unit 233, a source analysis unit 234, a screen insertion unit 235, a signature execution unit 236, a communication control unit 237, and a moving destination monitoring unit 238.

The service cooperation unit 231 communicates with the cloud systems 600 and 700 and the control server 100. The service cooperation unit 231 includes a core unit 231a and an adapter unit 231b.

The core unit 231a performs communication for a data operation on the cloud service or communication with the control server 100, in the service cooperation unit 231. However, the core unit 231a does not have a function for performing authentication with the cloud service.

The adapter unit 231b executes an authentication function with the cloud service, in the service cooperation unit 231. The adapter unit 231b performs authentication with the cloud service, based on the adapter table stored in the storage unit 210. The adapter table may be updated by the control server 100, in response to the addition of the cloud service or the change in the authentication protocol of the existing cloud service.

The authentication information management unit 232 manages authentication information of the user agent 230 used when authenticating the cloud service. The authentication information may include, for example, an identifier (ID), a password, or the like of the user agent. For example, the authentication information management unit 232 receives authentication information input by the user or the like and stores the authentication information in the storage unit 210.

The operation monitoring unit 233 monitors an operation by the user on an operation screen of the cloud service and acquires content of a data operation according to a user's operation. The operation monitoring unit 233 notifies the control server 100 of the acquired content of the data operation via the service cooperation unit 231.

The source analysis unit 234 analyzes a source file of the operation screen of the cloud service displayed by the browser 220 and provides an insertion position of a screen provided by the control server 100 to the screen insertion unit 235. Here, the screen provided by the control server 100 is referred to as a TaaS screen. Furthermore, the source file of the operation screen is, for example, a file in a hypertext markup language (HTML) format.

The screen insertion unit 235 inserts the TaaS screen in the operation screen of the cloud service and displays a screen after insertion by the browser 220.

When receiving an instruction to add an electronic signature to data stored in the cloud service from the control server 100, the signature execution unit 236 acquires the data from the cloud service and adds an electronic signature in a signature format designated by the control server 100 to the data. The signature execution unit 236 may request an external service to add a signature according to the designated signature format. When the addition of the electronic signature is completed, the signature execution unit 236 notifies the control server 100 of that.

When receiving an instruction to move the data stored in the cloud service to another cloud service from the control server 100, the communication control unit 237 acquires the data from the cloud service and stores the data in a designated folder of the another cloud service.

In a case where certain data is moved to the folder in the another cloud service, the moving destination monitoring unit 238 monitors a change status of an access policy set to the moving destination folder, and when detecting a change, notifies the control server 100 of the change.

Note that the client devices 200a, 400, and 400a have functions similar to those of the client device 200.

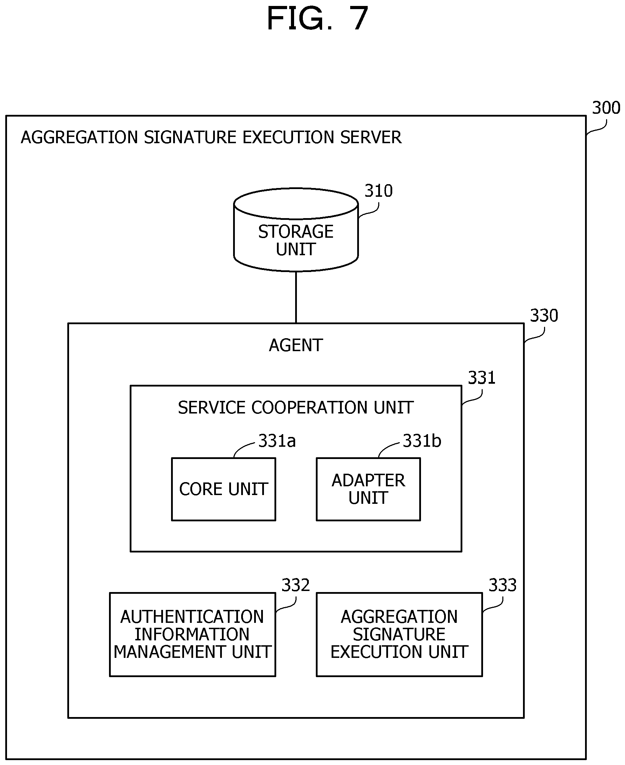

FIG. 7 is a diagram illustrating a functional example of an aggregation signature execution server.

The aggregation signature execution server 300 includes a storage unit 310 and an agent 330. As the storage unit 310, a storage region of a RAM, an HDD, or the like included in the aggregation signature execution server 300 is used. The agent 330 is realized by executing a program stored in the RAM included in the aggregation signature execution server 300 by a CPU included in the aggregation signature execution server 300.

The storage unit 310 stores data used for processing of the agent 330.

The agent 330 is an agent that cooperates with the cloud systems 600 and 700 and the control server 100. The agent 330 includes a service cooperation unit 331, an authentication information management unit 332, and an aggregation signature execution unit 333.

The service cooperation unit 331 has a function similar to that of the service cooperation unit 231. The function of the service cooperation unit 331 is divided into a core unit 331a and an adapter unit 331b. The core unit 331a has a function similar to that of the core unit 231a. The adapter unit 331b has a function similar to that of the adapter unit 231b.

The authentication information management unit 332 manages authentication information of the agent 330 used when authenticating the cloud service. The authentication information may include, for example, an ID, a password, or the like of the agent. For example, the authentication information management unit 332 receives authentication information input by the user or the like and stores the authentication information in the storage unit 310. The authentication information is used when the service cooperation unit 331 logs in the cloud service.

When authentication to the cloud service is performed by the service cooperation unit 331, in response to the instruction of the control server 100, the aggregation signature execution unit 333 adds an aggregation signature to data designated by the control server 100. Here, when a plurality of electronic signatures by a plurality of users is added to the data in the workflow and the plurality of electronic signatures is aggregated into a single aggregation signature, the control server 100 instructs the aggregation signature execution server 300 to add the aggregation signature. When acquiring the data from the cloud service, adding the aggregation signature to the data, and storing the data in the cloud service, the aggregation signature execution unit 333 notifies the control server 100 of completion of the aggregation signature addition.

Note that the aggregation signature execution server 500 has a function similar to that of the aggregation signature execution server 300.

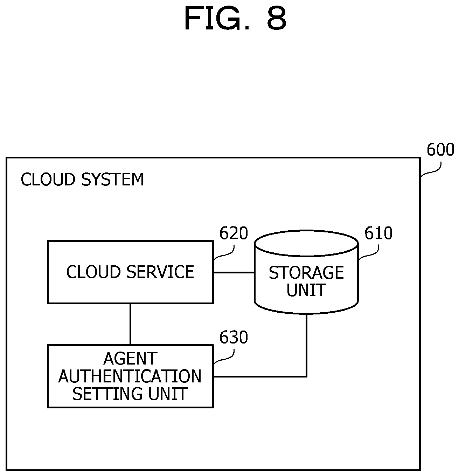

FIG. 8 is a diagram illustrating a functional example of the cloud system.

The cloud system 600 includes a storage unit 610, a cloud service 620, and an agent authentication setting unit 630. As the storage unit 610, a storage region of a RAM, an HDD, or the like included in the cloud system 600 is used. The cloud service 620 and the agent authentication setting unit 630 are realized by executing a program store in the RAM included in the cloud system 600 by a CPU included in the cloud system 600.

The storage unit 610 stores data used for processing of the cloud service 620 and the agent authentication setting unit 630.

The cloud service 620 provides a cloud-based storage service to the user. For example, the cloud service 620 creates a folder for each user in the storage unit 610 and stores data of the user in the folder. The cloud service 620 enables to set a user's access authority to the folder. Information indicating the access authority may be referred to as a policy, an access policy, or the like.

The agent authentication setting unit 630 sets authentication information to the cloud service 620 regarding the user agent executed by the client device or the agent executed by the aggregation signature execution server. For example, the agent authentication setting unit 630 sets the authentication information acquired from the user agent to the cloud service 620 and enables the agent to access the folder provided by the cloud service 620.

Note that the cloud system 700 has a function similar to that of the cloud system 600.

Next, a data structure example of data held by the control server 100 will be described.

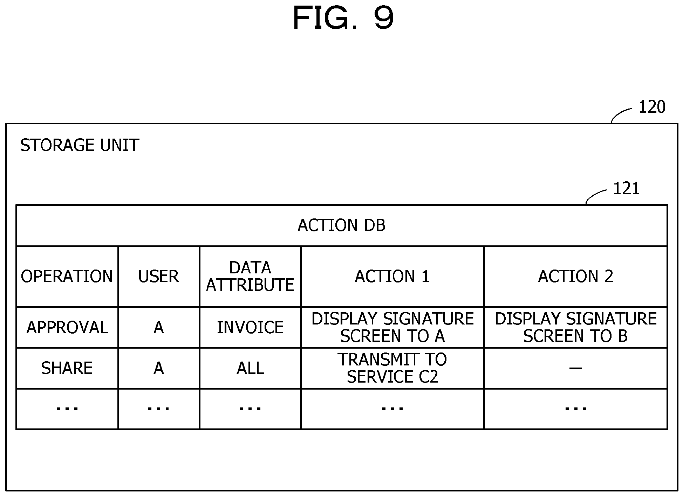

FIG. 9 is a diagram illustrating an example of an action DB.

The action DB 121 defines an action according to a data operation for the cloud service 620. An action DB is provided for another cloud service. The action DB 121 includes items of an operation, a user, a data attribute, an action 1, and an action 2.

In the item of the operation, a name of a folder to which a data operation is performed is registered. In the item of the user, an identification name of a user is registered. In the item of the data attribute, an attribute of data that is a data operation target is registered. In the item of the action 1, content of processing to be executed according to the operation, the user, and the data attribute is registered. In the item of the action 2, content of processing to be executed after the action 1 has been completed is registered. Note that there is a case where no action 2 is set. In the figure, no setting is indicated by a hyphen symbol "-".

For example, in the action DB 121, a record is registered having an operation "approval", a user "A", a data attribute "invoice", an action 1 "display signature screen to A", and an action 2 "display signature screen to B". This record indicates that, when the user A stores data having the data attribute "invoice" in a folder having the name of "approval" in the cloud service 620, the client device operated by the user A is caused to display a signature screen that instructs to add an electronic signature. Furthermore, it is indicated that, after the electronic signature of the user A is added to the data, a client device operated by the user B is caused to display a signature screen that instructs to add an electronic signature. As described above, the addition of the electronic signature is performed according to an approval workflow of the user for the data.

Furthermore, in the action DB 121, a record is registered having an operation "share", a user "A", a data attribute "ALL", an action 1 "transmit to service C2", and an action 2 - (setting none)". This record indicates that, when the user A stores data having any data attribute in a folder having the name "share" of the cloud service 620, a client device operated by the user A is caused to transmit the data to a cloud service identified with the service C2. Here, designation of a data storage destination folder in a transmission destination cloud service may be included in the action 1. Alternatively, the storage destination folder may be determined in advance as a folder having a predetermined name such as the folder name "share".

Note that an example has been described in which the maximum number of actions that are sequentially performed is set to two. However, the maximum number may be equal to or more than three.

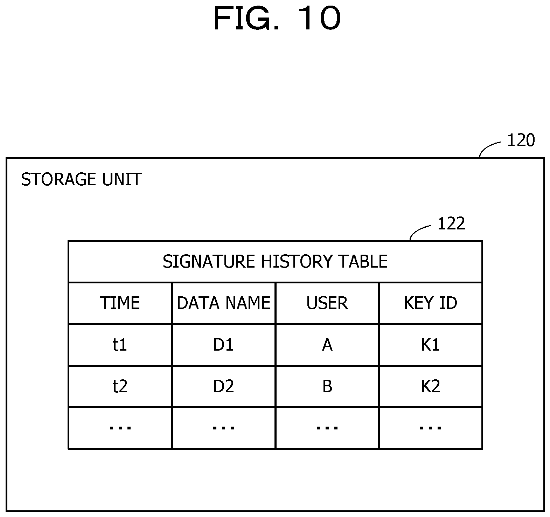

FIG. 10 is a diagram illustrating an example of a signature history table.

The signature history table 122 includes items of a time, a data name, a user, and a key ID. In the item of the time, a time when an electronic signature is added is registered. In the item of the data name, a data name to which the electronic signature is added is registered. In the item of the user, an identification name of a user who owns a private key used for the electronic signature is registered. In the item of the key ID, a key ID of the private key used for the electronic signature is registered.

For example, in the signature history table 122, a record is registered having a time "t1", a data name "D1", a user "A", and a key ID "K1". This record indicates that an electronic signature is added to data having the data name "D1" with a private key identified by using the key ID "K1" of the user A at the time "t1".

In the signature history table 122, a record of a history of electronic signature addition to other pieces of data is also registered.

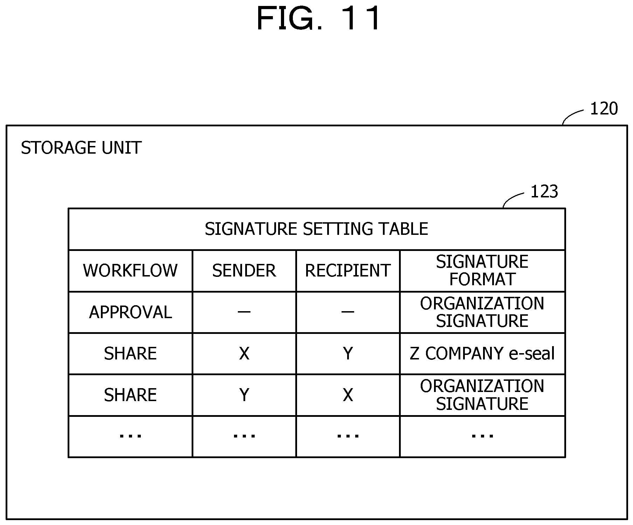

FIG. 11 is a diagram illustrating an example of a signature setting table.

The signature setting table 123 includes items of a workflow, a sender, a recipient, and a signature format. In the item of the workflow, a type of the workflow is registered. In the item of the sender, an organization name of a data transmission source at the time when data is shared between organizations is registered. In the item of the recipient, an organization name of a data transmission destination at the time when data is supplied between organizations is registered. In the item of the signature format, a format of a signature to be added to data is registered.

For example, in the signature setting table 123, a record is registered having a workflow "approval", a sender "-", a recipient "-", and a signature format "organization signature". This record indicates that, in a case where an execution type of the workflow is "approval", the "organization signature" is used as the signature format. With the organization signature, an approval by each of the plurality of users is sequentially received according to the workflow, an electronic signature corresponding to the user is added to the data according to the approval, and the plurality of electronic signatures is aggregated as an aggregation signature when an electronic signature of the final user is added. With the aggregation signature, it is possible to verify that the data is appropriately created by the plurality of users according to the workflow.

Furthermore, in the signature setting table 123, a record is registered having a workflow "share", a sender "X", a recipient "Y", and a signature format "Z company e-seal". E-seal is an abbreviation of an electronic seal, and also referred to as an e seal. This record indicates that, when the execution type of the workflow is "share", the sender of the data is the organization X, and the recipient is the organization Y, "Z company e-seal" is used as the signature format. In this way, in a case where data is shared across the organizations, by adding a signature such as the e-seal by an external service, it is possible to enhance reliability of validity of the data. Here, the e-seal may be considered as one type of electronic signature.

In the signature setting table 123, a signature format is similarly registered for content of another action.

Note that, in the signature history table 122 described above, a history of addition of signature data such as the e-seal is recorded.

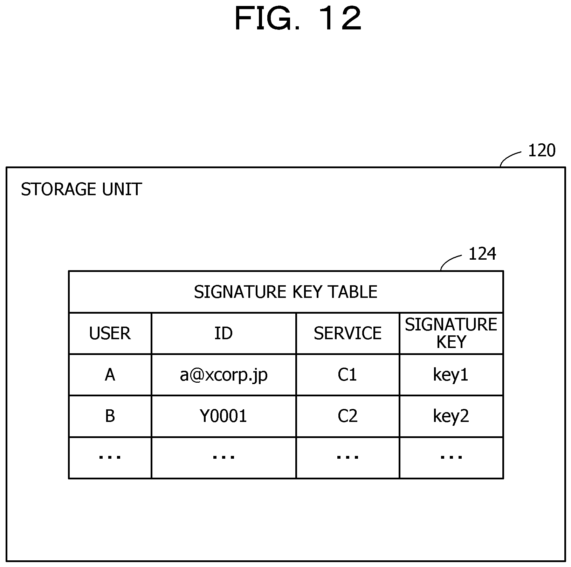

FIG. 12 is a diagram illustrating an example of a signature key table.

The signature key table 124 includes items of a user, an ID, a service, and a signature key. In the item of the user, an identification name of a user is registered. In the item of the ID, a user ID of the user in a cloud service is registered. In the item of the service, identification information of the cloud service is registered. In the item of the signature key, a private key of the user used for an electronic signature is registered.

For example, in the signature key table 124, a record is registered having a user "A", an ID "a@xcorp.jp", a service "C1", and a signature key "key1". Here, it is assumed that identification information of the cloud service 620 be "C1". In other words, this record indicates that an ID of the user A in the cloud service 620 is "a@xcorp.jp" and a private key used for an electronic signature of the user A is "key1".

In the signature key table 124, an ID and a private key in the cloud service for another user are similarly registered.

Note that the key ID is added to the private key as described above, and the private key is managed. The signature key table 124 may include an item of the key ID.

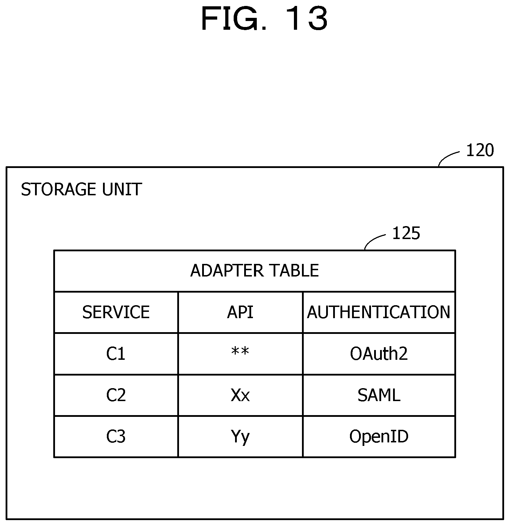

FIG. 13 is a diagram illustrating an example of an adapter table.

The adapter table 125 includes items of a service, an API, and authentication. In the item of the service, identification information of the cloud service is registered. In the item of the API, information indicating a module of an API used for authentication is registered. The module is installed in each client device in advance. In the item of the authentication, information indicating a protocol used for authentication is registered.

For example, in the adapter table 125, a record is registered having a service "C1", an API "**", and authentication "OAuth2". This record indicates that authentication is performed on the cloud service 620 using the authentication protocol "OAuth2" by the module of the API included in the user agent.

In the adapter table 125, information indicating a module of an API for authentication for another cloud service and information regarding an authentication protocol are similarly registered.

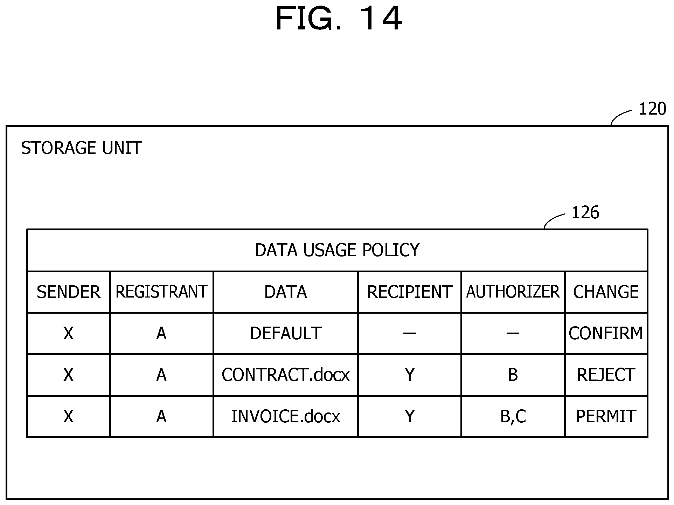

FIG. 14 is a diagram illustrating an example of a data usage policy.

The data usage policy 126 includes items of a sender, a registrant, data, a recipient, an authorizer, and a change. In the item of the sender, an identification name of a sender organization is registered. In the item of the registrant, an identification name of a user who has registered data in a "shared" folder is registered. In the item of the data, a name of data is registered. In the item of the recipient, an identification name of a data recipient organization is registered. In the item of the authorizer, an identification name of a user who permits access to sent data is registered. In the item of the change, registrant's permission/rejection classification for the change in a case where the policy of the folder in the cloud service where the sent data is stored is changed so that the access limitation is relaxed is registered. The permission/rejection classification includes "confirmation", "rejection", and "permission". The "confirmation" indicates to confirm the registrant whether or not to permit or reject a policy change at each policy change for relaxing the access limitation. The "rejection" indicates to reject the policy change for relaxing the access limitation. The "permission" indicates to permit the policy change for relaxing the access limitation. Note that, a case where the policy change for tightening the access limitation may be assumed as permission.

Here, relaxing the access limitation means that the number of users who are permitted to access the folder is increased. On the other hand, tightening the access limitation means that the number of users who are permitted to access the folder is decreased.

For example, in the data usage policy 126, a record is registered having a sender "X", a registrant "A", data "default", a recipient "-", an authorizer "-", and a change "confirmation". This record indicates that, in a case where data is registered in the "shared" folder of the cloud service 620, the user A of the organization X confirms the user A whether or not to permit or reject each time when a policy of the folder where the data is stored in another cloud service that is a data recipient is changed. Note that this record is default setting content for the sender "X" and the registrant "A", and in a case where setting content for specific data exists in another record, the setting content in the another record is prioritized.

For example, in the data usage policy 126, a record is registered having a sender "X", a registrant "A", data "contract.docx", a recipient "Y", an authorizer "B", and a change "rejection". This record indicates that, in a case where the user A of the organization X registers the data in the "shared" folder of the cloud service 620, when an access authorizer of a recipient folder is the user B of the organization Y, the data is permitted to be sent to another cloud service. Furthermore, it is indicated that the policy change of the recipient folder is constantly rejected.

In the data usage policy 126, for other pieces of data, similarly, a user of a recipient organization who is permitted to access and permission/rejection classification of a policy change of another party's folder after the transmission are registered.

In this way, as the data usage policy 126, at least one of a policy according to an organization or a user that owns data or a policy according to the data can be set.

Next, an example of processing to be executed based on the data structure described above will be described. First, an action determination example based on the action DB 121 by the control server 100 will be described.

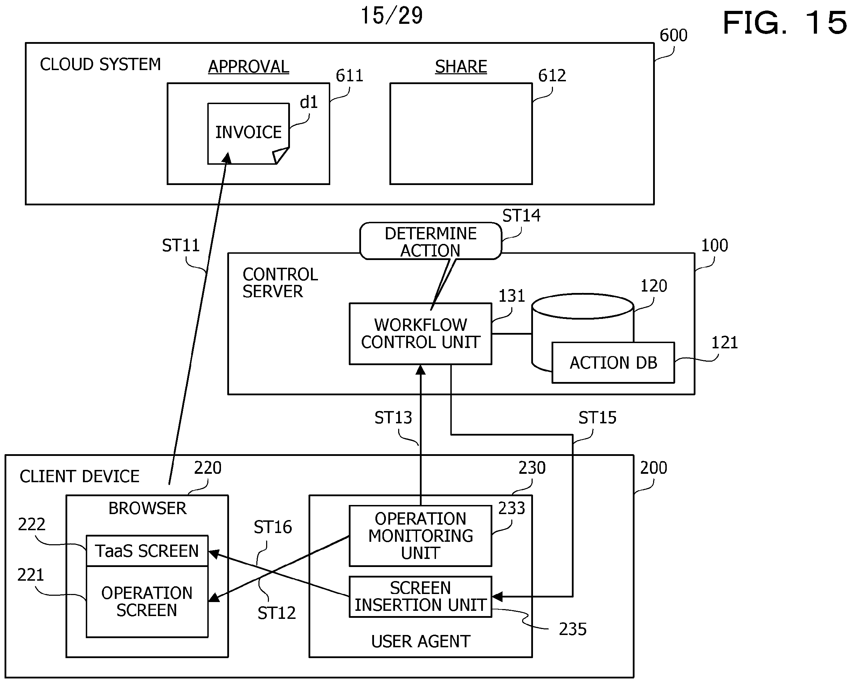

FIG. 15 is a diagram illustrating an action determination example.

It is assumed that the client device 200 be operated by the user A. The user A creates data d1 using the client device 200. The data d1 includes information having an attribute "invoice" of the data. The user A logs in the cloud system 600 using the client device 200 and displays an operation screen 221 on the browser 220. The user A operates the operation screen 221 and stores the data d1 in an approval folder 611 of the cloud system 600 (step ST11).

Here, the approval folder 611 used to start a workflow for approving data and a shared folder 612 used to share data with a user in another organization are provided in the cloud system 600 in advance.

The operation monitoring unit 233 detects that the data d1 is stored in the approval folder 611, through the operation of the user A on the operation screen 221 (step ST12). For example, the operation monitoring unit 233 may detect that the data d1 is stored in the approval folder 611 through the operation of the user A, by periodically monitoring the approval folder 611.

The operation monitoring unit 233 notifies the control server 100 of that the data d1 having the attribute "invoice" is stored in the approval folder 611 by the user A (step ST13).

Upon receiving the notification in step ST13 from the operation monitoring unit 233, the workflow control unit 131 determines an action according to the notified content of the data operation based on the action DB 121 (step ST14). Since the data having the attribute "invoice" is stored for the approval folder 611 by the user A, the workflow control unit 131 determines to instruct to add an electronic signature, as an action, based on the action DB 121.

Then, the workflow control unit 131 instructs the client device 200 to display a signature screen that prompts to add an electronic signature as a TaaS screen (step ST15).

When receiving the instruction in step ST15 from the control server 100, the screen insertion unit 235 displays a TaaS screen 222 that prompts to add the electronic signature in the operation screen 221 of the browser 220 (step ST16). The electronic signature is added in response to the approval of the data d1. Therefore, for example, an "approval" button is displayed in the TaaS screen 222. When the button is pressed by the user A, the client device 200 acquires the data d1 stored in the approval folder 611 and adds an electronic signature of the user A to the data d1.

Next, an insertion example of a TaaS screen by the client device 200 will be described.

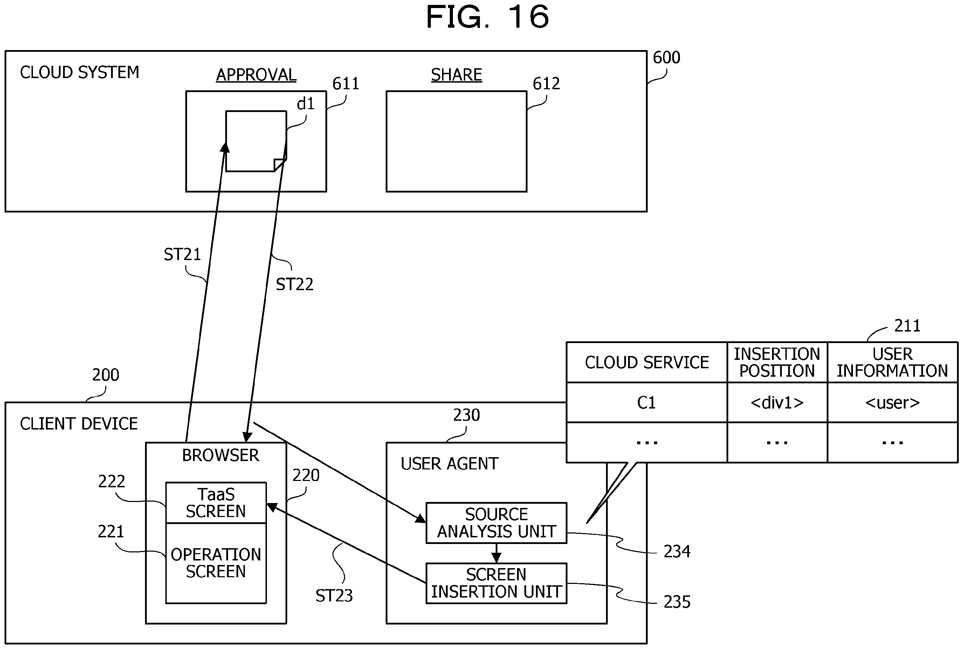

FIG. 16 is a diagram illustrating a TaaS screen insertion example.

The browser 220 transmits information regarding a screen operation by the user A on the operation screen 221, to the cloud system 600 (step ST21). The cloud service 620 of the cloud system 600 responds an operation screen source according to the information regarding the screen operation to the client device 200 (step ST22).

The source analysis unit 234 acquires the operation screen source and specifies an insertion position of the TaaS screen. For example, it is considered that the client device 200 holds screen configuration information 211 in advance for each cloud service in the storage unit 210 or the like. In the screen configuration information 211, information regarding a screen element corresponding to the insertion position of the TaaS screen 222 in the operation screen source (for example, <div1> tag), a screen element of an acquisition source of user information to be added to the TaaS screen 222 (for example, <user> tag), or the like is registered in advance.

The source analysis unit 234 acquires the insertion position of the TaaS screen 222, the user information to be added to the TaaS screen 222, or the like from the operation screen source based on the screen configuration information 211 and provides the acquired information to the screen insertion unit 235. The screen insertion unit 235 causes the browser 220 to display the operation screen 221 and the TaaS screen 222, based on the information acquired from the source analysis unit 234 (step ST23).

Next, an example of adding an electronic signature by the client device 200 will be described.

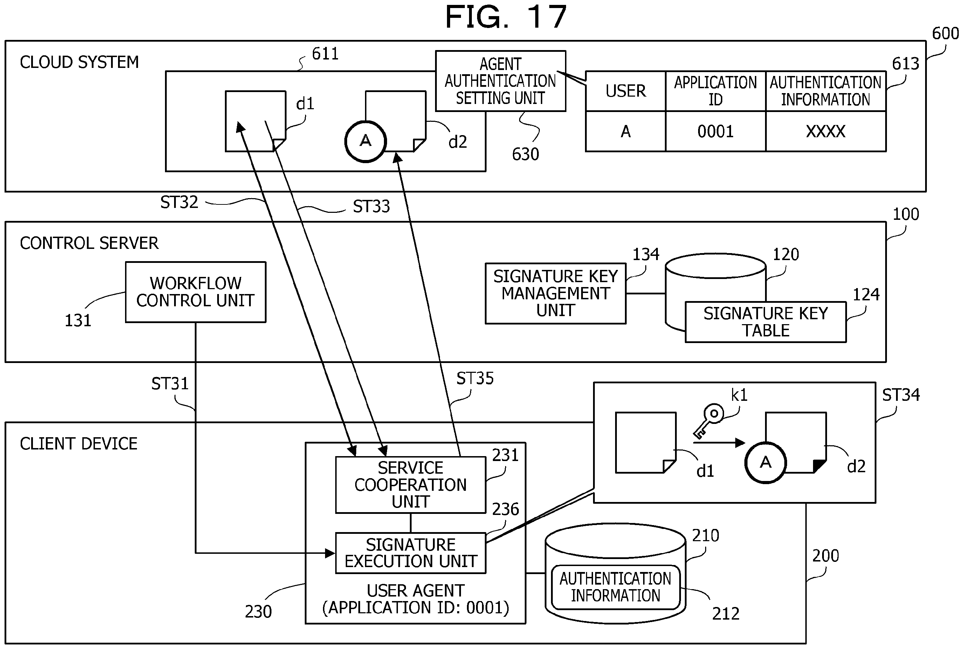

FIG. 17 is a diagram illustrating an example of adding an electronic signature.

The workflow control unit 131 instructs the client device 200 to sign the data d1 (step ST31). The signature instruction in step ST31 is issued together with the instruction in step ST15, for example.

The signature execution unit 236 receives an operation to start to add the electronic signature by the user A, on the TaaS screen 222. The operation to start to add the electronic signature is, for example, an operation for pressing the "approval" button in the TaaS screen 222. Then, the signature execution unit 236 acquires the data d1 via the service cooperation unit 231.

First, the service cooperation unit 231 logs in the cloud service 620 using authentication information 212 of the user A and the user agent 230 for the cloud service 620, stored in the storage unit 210 (step ST32). For example, the authentication information 212 is transmitted to the cloud system 600 by the service cooperation unit 231 and is set to the cloud service 620 by the agent authentication setting unit 630. In the authentication information 212, the user agent 230 is identified with an application ID "0001". Note that the authentication information of the user A and the user agent 230 for the cloud service 620 is held in an authentication table 613 and is collated with the authentication information 212. The authentication table 613 is stored, for example, in the storage unit 610 in advance. As a result, the user agent 230 can access the approval folder 611 provided by the cloud service 620.

The service cooperation unit 231 downloads the data d1 from the approval folder 611 (step ST33). Here, "DL" in the figure is an abbreviation of Download.

The signature execution unit 236 adds the electronic signature to the data d1 using a private key k1 of the user A (step ST34). To add the electronic signature to the data d1, an existing method can be used. Specifically, the electronic signature is added to the data d1 by adding a value obtained by encrypting a hash value of information based on the data d1 with the private key to the data d1. For example, the electronic signature may be added in a format such as an organization signature to be described later. The signature execution unit 236 updates the data d1 to data d2 by adding the electronic signature to the data d1.

The service cooperation unit 231 uploads the data d2 that is a result of adding the electronic signature by the signature execution unit 236 to the approval folder 611 (step ST35). Here, "UL" in the figure is an abbreviation of Upload.

Note that, as the private key k1 in step ST34, the same private key as the private key k1 of the user A stored in the signature key table 124 held by the control server 100 is used. The private key k1 is generated by the signature key management unit 134 and is shared with the client device 200 in advance. For example, the private key k1 may be stored in a predetermined key store of the client device 200 in advance together with an electronic certificate of the user A.

Next, an example of signature history record by the control server 100 will be described.

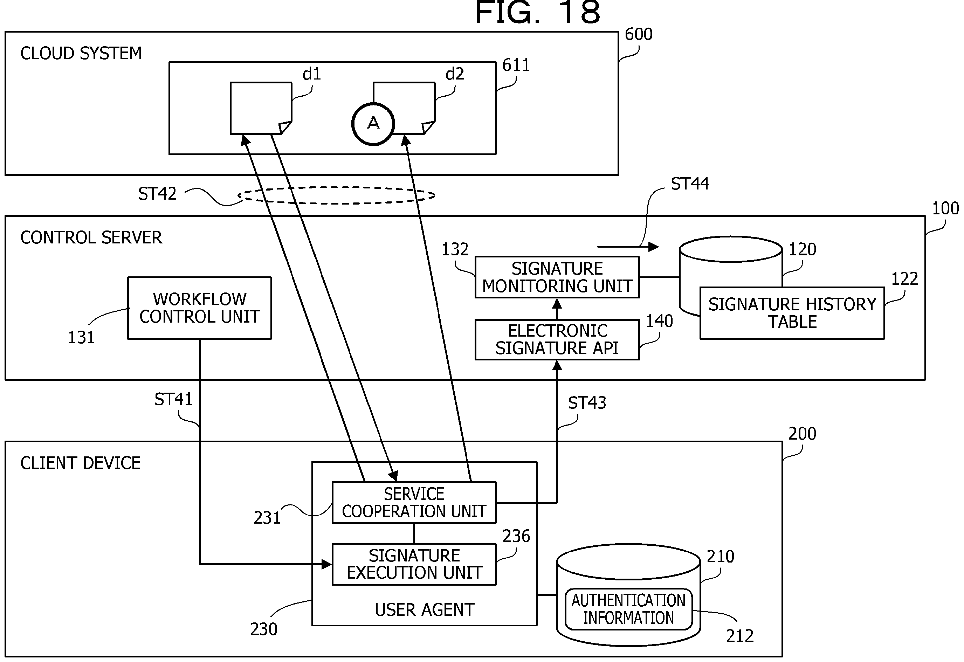

FIG. 18 is a diagram illustrating an example of the signature history record.

The workflow control unit 131 instructs the client device 200 to sign the data d1 (step ST41). The signature instruction in step ST41 is issued together with the instruction in step ST15, for example.

The service cooperation unit 231 and the signature execution unit 236 acquire the data d1 from the approval folder 611, add the electronic signature to the data d1, and store the data d2 after the signature has been added in the approval folder 611 (step ST42).

The service cooperation unit 231 reports to the control server 100 that the addition of the electronic signature of the user A to the data d1 has been completed (step ST43). The report includes information regarding a time when the electronic signature is added. The electronic signature API 140 receives the report and notifies the signature monitoring unit 132 of the report. When receiving the notification from the electronic signature API 140, the signature monitoring unit 132 records a history of the electronic signature to the signature history table 122 (step ST44).

Note that the completion of the addition of the electronic signature of the user A is also notified from the electronic signature API 140 to the workflow control unit 131. When receiving the notification, the workflow control unit 131 performs the following action, in a case where there is the following action, based on the action DB 121. For example, in the approval workflow, the workflow control unit 131 displays the TaaS screen that prompts the electronic signature on the operation screen of the cloud service of the browser of the client device used by the next approver. In this way, the history of the electronic signature is recorded, and the workflow is proceeded.

Next, an example of signature status confirmation by the control server 100 will be described.

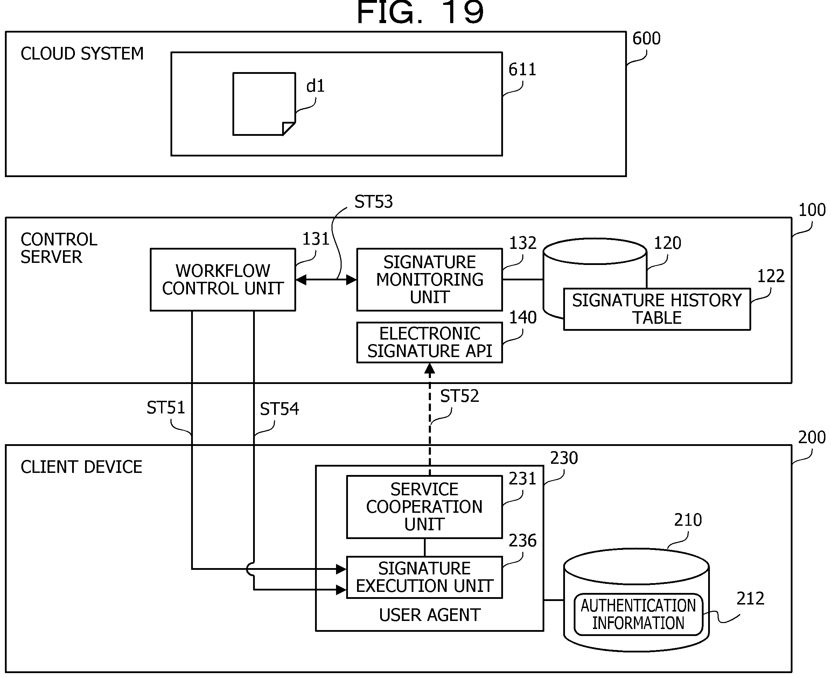

FIG. 19 is a diagram illustrating an example of signature status confirmation.

The workflow control unit 131 instructs the client device 200 to sign the data d1 (step ST51). The signature instruction in step ST51 is issued together with the instruction in step ST15, for example.

Even if a certain period has passed after the instruction in step ST51, the electronic signature API 140 does not receive the report of the electronic signature addition completion from the client device 200 (step ST52). In other words, there is no report of the electronic signature addition completion from the client device 200.

When a certain period has passed after the signature instruction in step ST51, the workflow control unit 131 inquires the signature monitoring unit 132 about confirmation of the signature status regarding the signature instruction (step ST53). The signature monitoring unit 132 refers to the signature history table 122 and responds to the workflow control unit 131 that the electronic signature is not added in response to the signature instruction.

The workflow control unit 131 inquires the client device 200 about confirmation of the signature status regarding the signature instruction in step ST51 (step ST54). The signature execution unit 236 responds an execution status of the electronic signature for the inquiry. For example, if the electronic signature has been added, the signature execution unit 236 responds that the electronic signature has been added. Furthermore, if the electronic signature has not been added, the signature execution unit 236 responds that the electronic signature has not been added. In a case where the electronic signature has not been added, the user agent 230 may cause the screen insertion unit 235 to display the TaaS screen 222 again and prompt to approve the data d1 by the user A, in other words, to add the electronic signature to the data d1.

Next, an example of signature control based on the signature setting table 123 by the control server 100 will be described.

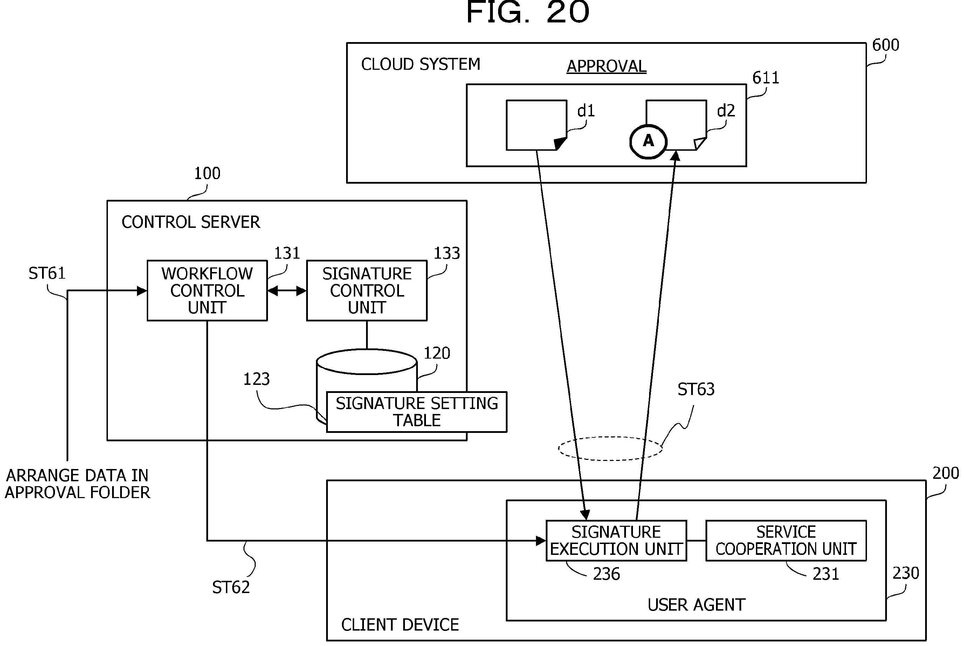

FIG. 20 is a diagram illustrating a signature control example.

The workflow control unit 131 receives a notification indicating that the data d1 is arranged in the approval folder 611 by the user A from the client device 200 (step ST61).

The workflow control unit 131 determines to instruct to add the electronic signature based on the action DB 121 and inquires a signature format to the signature control unit 133. Since data is arranged in the approval folder 611 based on the signature setting table 123, the signature control unit 133 responds the organization signature to the workflow control unit 131 as the signature format.

The workflow control unit 131 instructs the client device 200 to add the organization signature to the data d1 (step ST62). Step ST62 corresponds to steps ST31, ST41, and ST51 described above, and is executed together with the instruction in step ST15, for example.

When receiving step ST62, the service cooperation unit 231 and the signature execution unit 236 acquire the data d1 from the approval folder 611 and add the organization signature, and store the data d2, to which the organization signature has been added, in the approval folder 611 (step ST63).

By storing the data d2 in the shared folder 612, the user A can share the data d2 with a user in another organization via the cloud service. In that case, it is possible to add a signature in a different format to the data d2.

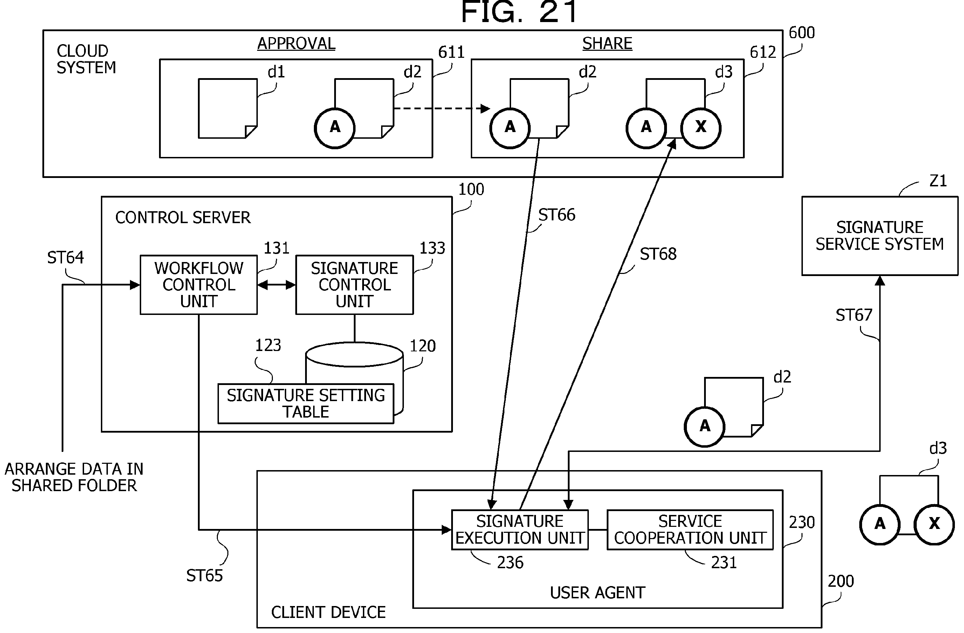

FIG. 21 is a diagram illustrating the signature control example (continued).

The workflow control unit 131 receives a notification indicating that the data d2 is arranged in the shared folder 612 by the user A from the client device 200 (step ST64).

The workflow control unit 131 determines to move data to the user B in the organization Y different from the organization X to which the user A belongs based on the action DB 121 and inquires the signature control unit 133 about a signature format for the data d2 when the movement is performed. Since the data is arranged in the shared folder 612 and the data is sent from the organization X to the organization Y based on the signature setting table 123, the signature control unit 133 responds the Z company e-seal to the workflow control unit 131 as the signature format. Note that the data transmission to the organization Y means that the data is stored in a predetermined shared folder provided by a cloud service 720 used by the organization Y.

The workflow control unit 131 instructs the client device 200 to add an e-seal to the data d2 (step ST65).

When receiving the instruction in step ST65, the signature execution unit 236 downloads the data d2 from the shared folder 612 via the service cooperation unit 231 (step ST66).

The signature execution unit 236 requests an external signature service system Z1 operated by the company Z, via the network 50, to add the e-seal to the data d2. The e-seal is used to verify that the data d2 is data that has been properly created by the organization X and is not tampered by a third party. The signature service system Z1 updates the data d2 to data d3 by adding the e-seal to the data d2. The signature execution unit 236 acquires the data d3 from the signature service system Z1 (step ST67).

The signature execution unit 236 uploads the data d3 to the shared folder 612 (step ST68).

Note that, with the organization signature, when approval by a final approver from among a plurality of approvers in the workflow is completed, an aggregation signature is added to the data by the aggregation signature execution server 300. Therefore, when the approval by the final approver has been completed, the control server 100 instructs the aggregation signature execution server 300 to add the organization signature. Then, the agent 330 of the aggregation signature execution server 300 acquires the data from the approval folder 611 of the cloud system 600, adds the aggregation signature, and stores the data to which the aggregation signature has been added in the approval folder 611. For example, the data d2 stored in the shared folder 612 may be the data to which the aggregation signature has been added.

Next, an update example of an adapter table by the control server 100 will be described.

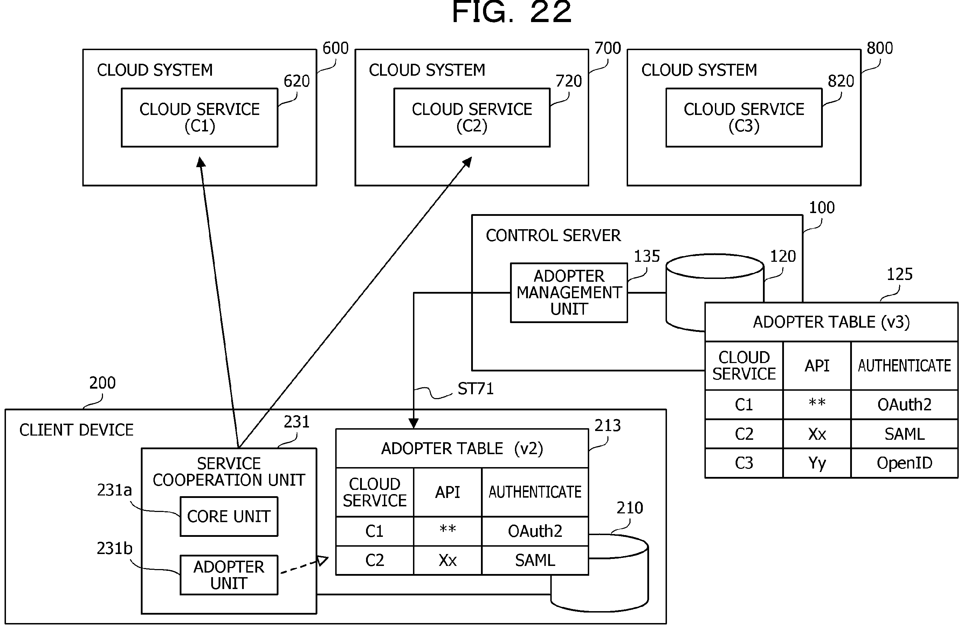

FIG. 22 is a diagram illustrating the update example of the adapter table.

The service cooperation unit 231 saves an adapter table 213 distributed from the control server 100 in the storage unit 210. The adapter unit 231b accesses the cloud services 620 and 720 respectively provided by the cloud systems 600 and 700, based on the adapter table 213. It is assumed that a version of the adapter table 213 be "2". In FIG. 22, the "version" is abbreviated as v (version).

For example, it is considered that a cloud service 820 of a cloud system 800 is newly added and an access from the client device 200 to the cloud system 800 is enabled. In this case, the adapter table with the version "2" is updated to an adapter table 125 with a version "3" by the control server 100. The adapter table 125 includes information regarding an authentication protocol for the cloud service 820.

The adapter management unit 135 periodically confirms the version of the adapter table 213 held by the client device 200. The adapter management unit 135 determines whether or not the version of the adapter table 213 is older than the latest version held by the control server 100, and in a case where the version is older, the adapter management unit 135 transmits the latest version of the adapter table 125 to the client device 200. When receiving the latest version of the adapter table 125, the service cooperation unit 231 updates the adapter table 213 held by the storage unit 210 to the adapter table 125 (step ST71).

In this case, in a case where the cloud service that can be accessible or in a case where the authentication protocol for the existing cloud service is changed, it is possible to more easily cope with the update of the adapter table. Therefore, it is possible to reduce an increase in a frequency of program modification of the service cooperation unit 231 and to reduce operation management cost.

Next, an example of user management with a private key by the control server 100 will be described.

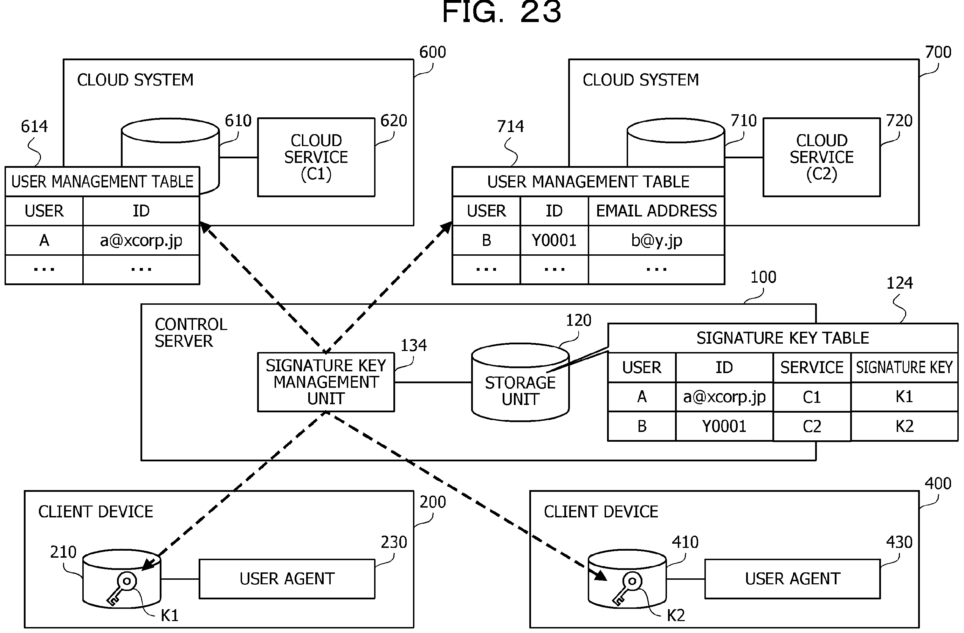

FIG. 23 is a diagram illustrating an example of the user management with the private key.

As described above, a signature key used as a signature of the user A who operates the client device 200, in other words, a private key K1 is generated by the control server 100 and is provided to the client device 200. The private key K1 is saved in the storage unit 210 by the user agent 230. Furthermore, a signature key used as a signature of the user B who operates the client device 400, in other words, a private key K2 is generated by the control server 100 and is provided to the client device 400. The private key K2 is saved in a storage unit 410 of the client device 400 by a user agent 430 executed by the client device 400.

The signature key management unit 134 of the control server 100 manages the signature key in association with the user management information in the cloud services 620 and 720.

For example, the cloud service 620 manages a user with a user management table 614 stored in the storage unit 610. The user management table 614 manages the name "A" of the user A in association with the ID "a@xcorp.jp" in the cloud service 620. Furthermore, the cloud service 720 manages the user with a user management table 714 stored in a storage unit 710. The user management table 714 manages the name "B" of the user B in association with an ID "Y0001" and an email address "b@y.jp" in the cloud service 720.

The signature key management unit 134 acquires the ID of the user A in the user management table 614 from the cloud service 620 and registers the ID in the signature key table 124 in association with the identification information "C1" of the cloud service 620 and the private key K1 of the user A. Furthermore, the signature key management unit 134 acquires the ID of the user B in the user management table 714 from the cloud service 720 and registers the ID in the signature key table 124 in association with the identification information "C2" of the cloud service 720 and the private key K2 of the user B. In this way, even in a case where a system of a user ID added by each cloud service is different, it is possible to centrally manage the user of each cloud service by the control server 100 using the signature key, in other words, the private key. Therefore, for example, with the control server 100, it is possible to realize a workflow in which the users A and B who belong to companies different from each other and use cloud services different from each other serve as approvers.

Next, an example of data movement according to policy evaluation of the control server 100 will be described.

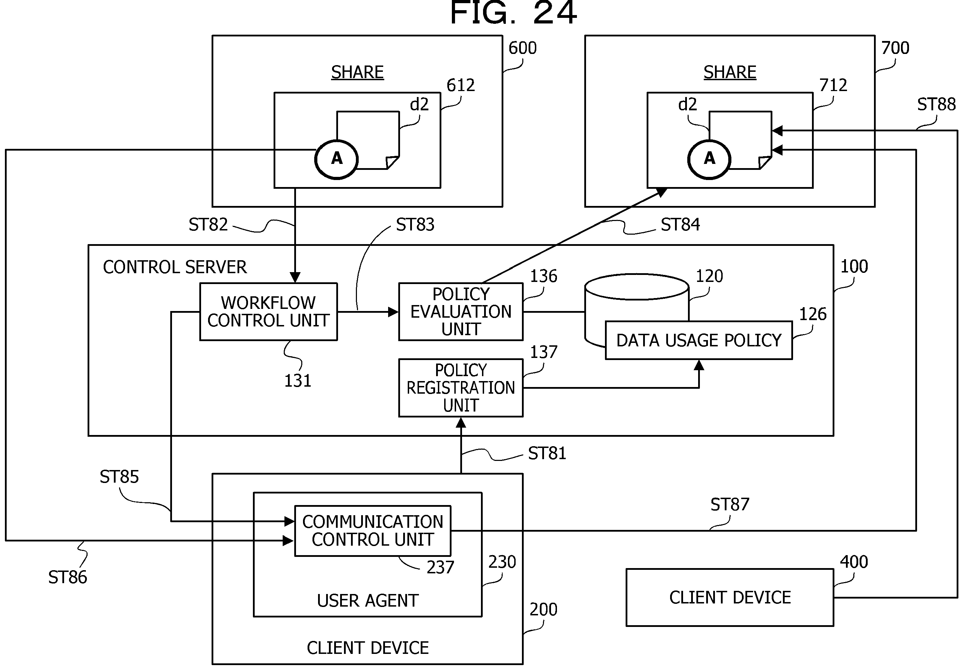

FIG. 24 is a diagram illustrating an example the data movement according to the policy evaluation.

First, the user A operates the client device 200 and registers policy information indicating content of access limitation to the data d2 to be moved to the control server 100 (step ST81). The policy registration unit 137 registers the policy information acquired from the client device 200 to the data usage policy 126.

The workflow control unit 131 detects that the data d2 is stored by the client device 200 in the shared folder 612 provided by the cloud service 620, in other words, an occurrence of a data movement trigger operation (step ST82). As described above, the detection is performed by receiving the notification indicating that the new data d2 is stored in the shared folder 612 from the client device 200 through monitoring of the shared folder 612 by the client device 200. Since the data d2 is stored in the shared folder 612, the workflow control unit 131 specifies an action for transmitting the data d2 to the cloud service 720 based on the action DB 121. A storage destination folder of the data d2 in the cloud service 720 is a shared folder 712 provided in the cloud service 720.

The workflow control unit 131 instructs the policy evaluation unit 136 to evaluate a policy of the shared folder 712 (step ST83). The policy evaluation unit 136 confirms access limitation setting information of the shared folder 712 to the cloud service 720 (step ST84).

Specifically, the policy evaluation unit 136 acquires the access limitation setting information of the shared folder 712 from the cloud service 720 and compares the acquired information with the policy information for the data d2 registered by the user A in the data usage policy 126. The policy evaluation unit 136 determines whether or not the access limitation of the shared folder 712 matches the policy information for the data d2 and notifies the workflow control unit 131 of the determination result.

The workflow control unit 131 determines whether or not to permit the data movement according the determination result by the policy evaluation unit 136. In other words, in a case of receiving the determination result indicating that the access limitation of the shared folder 712 matches the policy information for the data d2, the workflow control unit 131 permits the data movement. On the other hand, in a case of receiving the determination result indicating that the access limitation of the shared folder 712 does not match the policy information for the data d2, the workflow control unit 131 does not permit the data movement. Here, a case will be described where the data movement is permitted, as an example. Note that, in a case where the data movement is not permitted, the following data movement is not permitted.

The workflow control unit 131 instructs the client device 200 to move the data d2 to the shared folder 712 of the cloud service 720 (step ST85).

When receiving the instruction to move the data d2, the communication control unit 237 downloads the data d2 from the shared folder 612 provided by the cloud service 620 (step ST86). When the data d2 is moved, the communication control unit 237 deletes the data d2 from the shared folder 612. As described above, authentication processing for the cloud service 620 is automatically executed by the service cooperation unit 231. Note that, at the stage of steps ST81 to ST86, the data d2 is not stored in the shared folder 712 yet.

The communication control unit 237 uploads the data d2 to the shared folder 712 provided by the cloud service 720 (step ST87). At this time, the authentication processing for the cloud service 720 is automatically executed by the service cooperation unit 231.

In this way, the user B can operate the client device 400 and refer to the data d2 stored in the shared folder 712 (step ST88).

Next, an example in a case where setting of the access limitation to the moving destination shared folder 712, in other words, policy setting is changed will be described.

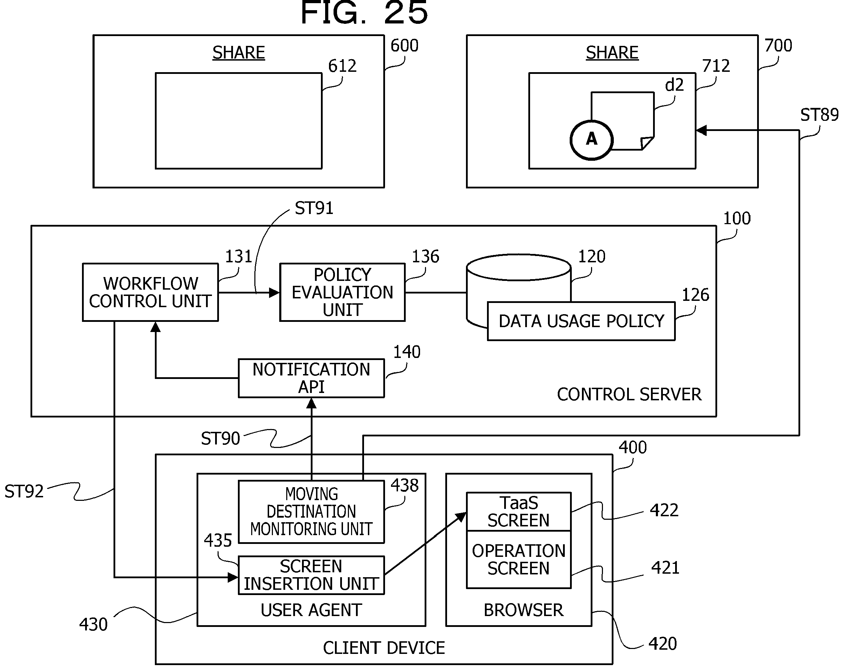

FIG. 25 is a diagram illustrating an example of a notification according to a policy setting change.

Similarly to the client device 200, the client device 400 executes a browser 420 and the user agent 430. The user agent 430 has functions similar to those of the user agent 230. However, in FIG. 25, a screen insertion unit 435 and a moving destination monitoring unit 438 are focused.

The moving destination monitoring unit 438 periodically monitors whether or not the policy setting of the shared folder 712 is changed (step ST89).

When the policy setting change of the shared folder 712 is detected, the moving destination monitoring unit 438 notifies the control server 100 of the policy setting change of the shared folder 712 (step ST90). When receiving the notification indicating the policy setting change of the shared folder 712, the notification API 150 outputs the notification to the workflow control unit 131.

The workflow control unit 131 instructs the policy evaluation unit 136 to evaluate the policy of the shared folder 712, according to the notification from the notification API 150 (step ST91).

The policy evaluation unit 136 acquires the access limitation setting information of the shared folder 712 from the cloud service 720 and compares the acquired information with the policy information for the data d2 registered by the user A, in the data usage policy 126. The policy evaluation unit 136 determines whether or not the access limitation of the shared folder 712 is relaxed as compared with that before the change, in other words, whether or not a policy change that increases users who can access is made. In a case where the access limitation is relaxed, the policy evaluation unit 136 further determines whether or not to permit the policy change of the shared folder 712, based on the data usage policy 126. The policy evaluation unit 136 responds the evaluation result for the policy change to the workflow control unit 131.

For example, in a case where the access limitation is relaxed, the policy evaluation unit 136 further determines whether or not confirmation for the user A at the time when the access limitation is relaxed is required, based on the data usage policy 126. The policy evaluation unit 136 notifies the workflow control unit 131 of the determination result regarding whether or not the confirmation is required.

The workflow control unit 131 executes processing according to notification content from the policy evaluation unit 136. For example, when receiving a response indicating that the confirmation of the user A is required from the policy evaluation unit 136 in a case where the access limitation of the shared folder 712 is relaxed, the workflow control unit 131 instructs the client device 200 to display a screen for confirming whether or not to permit the policy change. In a case where the user A does not permit the policy change of the shared folder 712, the workflow control unit 131 instructs the client device 400 to display a policy re-change (step ST92).

When receiving the instruction in step ST92, the screen insertion unit 435 of the user agent 430 displays a TaaS screen 422 in an operation screen 421 of the cloud service 720 displayed on the browser 420. The TaaS screen 422 is a screen used to notify the user B to re-change the policy of the shared folder 712.

Note that, in a case where the access limitation is strengthened, in other words, in a case where a policy change that reduces users who can access is made, the workflow control unit 131 permits the policy change of the shared folder 712. In a case of permitting the policy change, the workflow control unit 131 does not need to do anything or may instruct the client device 400 to display a notification screen indicating that the policy change is permitted.

Next, a processing procedure executed by the control server 100 and the client devices 200, 200a, 400, and 400a will be described.

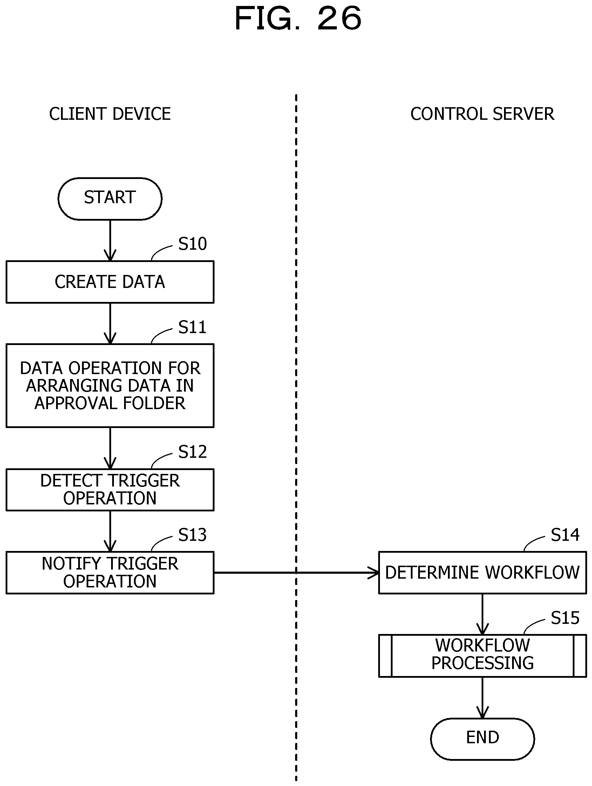

FIG. 26 is a flowchart illustrating a processing example (part 1) for a data operation.

Although the client device 200 will be mainly described below, the same procedure applies to the client devices 200a, 400, and 400a.
(S10) The client device 200 creates the data d1 according to the operation of the user A.
(S11) The client device 200 receives the data operation by the user A for arranging the data d1 in the approval folder 611 provided by the cloud service 620 and arranges the data d1 in the approval folder 611.
(S12) The client device 200 detects the trigger operation in step S11, in other words, the data operation by the user A to arrange the data d1 in the approval folder 611.
(S13) The client device 200 notifies the control server 100 of content of the detected trigger operation. The control server 100 receives the notification from the client device 200.
(S14) The control server 100 acquires information regarding the user A who has performed the operation, the operation content, an attribute of the data d1, and a storage destination folder included in the notification in step S13, and determines a workflow based on the action DB 121. For example, the control server 100 determines to start an approval processing workflow in which the users A and B are set as request destinations in order, based on the action DB 121. Furthermore, the control server 100 specifies a signature format according to an action determined based on the action DB 121, based on the signature setting table 123.
(S15) The control server 100 executes workflow processing. Details of the workflow processing will be described later. When the workflow processing is completed, the control server 100 ends the processing on the data operation in step S11.

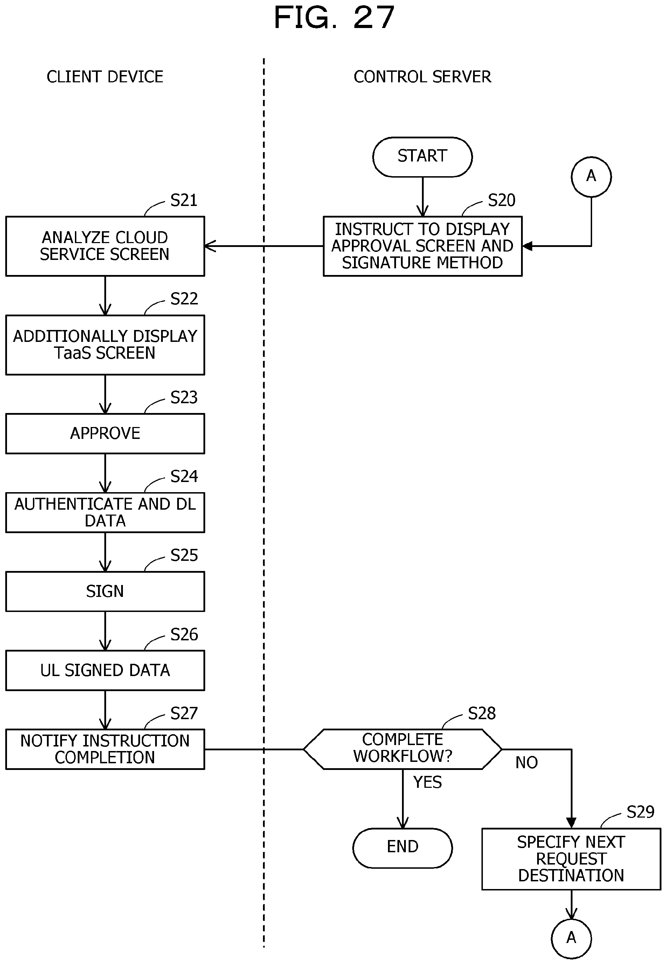

FIG. 27 is a flowchart illustrating an example of the workflow processing.

The workflow processing corresponds to step S15.

(S20) The control server 100 instructs a client device used by a user who is a next request destination to display an approval screen and a signature method including a signature format. For example, in a case where the next user in the workflow is the user A, the control server 100 instructs the client device 200 used by the user A to display the approval screen and the signature method. The control server 100 may hold information indicating a correspondence relationship between the client device and the user who uses the client device in the storage unit 120 in advance and specify the client device to be instructed, based on the information. Alternatively, the control server 100 may specify the client device used by the user who is the next request destination from a user's login status to the cloud service from the client device and issue an instruction to the client device.

In the following processing, the user A is exemplified as the next request destination in the workflow, and the description will be made as focusing on the client device 200 used by the user A. However, the client devices 200a, 400, and 400a may execute similar processing.
(S21) The client device 200 analyzes a source file of the operation screen 221 provided by the cloud service 620 and specifies a display position of the approval screen, in other words, the TaaS screen 222 based on the screen configuration information 211.
(S22) The client device 200 additionally displays the TaaS screen 222 in the operation screen 221 of the browser 220. A display position of the TaaS screen 222 is the display position specified in step S21.
(S23) The client device 200 receives an operation input for approval by the user A on the TaaS screen 222. For example, the user A displays the content of the data d2 on the operation screen 221 and confirms the content of the data d2, and then, performs an approval operation input on the TaaS screen 222.
(S24) The client device 200 executes authentication processing for logging on the cloud service 620 based on the authentication information 212 and downloads the data d1 from the approval folder 611. Note that the client device 200 can use an authentication protocol registered in the adapter table 213 held by the client device 200, in the authentication processing.
(S25) The client device 200 signs the data d1 with the signature method instructed from the control server 100. For example, in a case of instructed to add the organization signature, the client device 200 adds the electronic signature of the user A to the data d1 using the private key K1 of the user A. Alternatively, in a case of instructed to add the e-seal, the client device 200 requests the external signature service system Z1 to add the e-seal and acquires the data to which the e-seal has been added from the signature service system Z1.
(S26) The client device 200 uploads the signed data d2 to the approval folder 611.
(S27) The client device 200 notifies the control server 100 of instruction completion.
(S28) When receiving the notification indicating the instruction completion from the client device 200, the control server 100 records a record of a signature history this time in the signature history table 122. Then, the control server 100 determines whether or not the workflow has been completed. In a case where the workflow has been completed, the control server 100 ends the processing. In a case where the workflow has not been completed, the control server 100 proceeds the processing to step S29.
(S29) The control server 100 specifies a user who is a next request destination in the workflow. Then, the processing is proceeded to step S20.

In this way, after receiving an input of approval by the user, as indicated in steps S24 to S27, the client devices 200, 200a, 400, and 400a execute signature processing on the data d2 without the user's operation. Therefore, the user's operation procedure can be simplified. Furthermore, the signature processing to be executed at the time of approval of the data d1 can be more appropriately executed than that in a case where the signature processing is executed depending on the user's operation.

Note that, in a case where the organization signature is used as the signature format, there is a case where the aggregation signature by the aggregation signature execution server 300 is added at the end of the workflow. In that case, when an electronic signature is added to the data by the final user in the workflow, in step S29, the control server 100 specifies the aggregation signature execution server 300 as a next request destination. Then, the control server 100 instructs the aggregation signature execution server 300 to add the aggregation signature. The aggregation signature execution server 300 skips steps S21 to S23 and executes processing corresponding to steps S24 to S27, in response to the instruction. The aggregation signature execution server 500 executes processing similar to that of the aggregation signature execution server 300. In this way, the electronic signature can be added to the data in the format of the organization signature, without transferring the data to the control server 100.

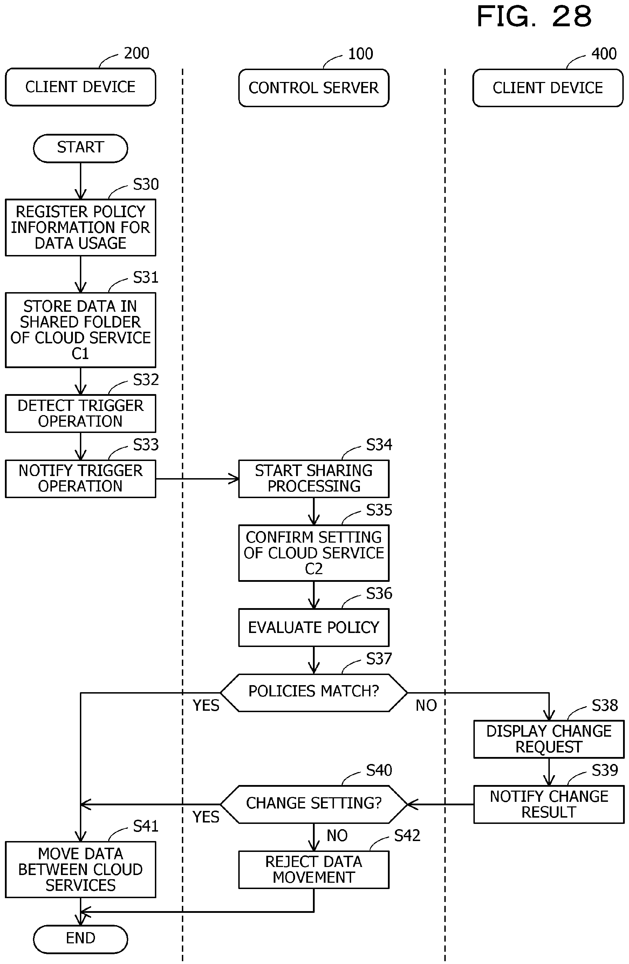

FIG. 28 is a flowchart illustrating the processing example (part 2) for the data operation.

Although the client devices 200 and 400 will be mainly described below, the same procedure applies to the client devices 200a and 400a. Furthermore, it is assumed that data to be moved be the data d2.
(S30) The client device 200 registers the policy information regarding the access limitation to the data d2 to the data usage policy 126, according to the operation by the user A.
(S31) The client device 200 receives the data operation by the user A to store the data d2 in the shared folder 612 provided by the cloud service 620 and stores the data d2 in the shared folder 612.
(S32) The client device 200 detects the trigger operation in step S31, in other words, the data operation by the user A for storing the data d2 in the shared folder 612.
(S33) The client device 200 notifies the control server 100 of content of the detected trigger operation. The control server 100 receives the notification from the client device 200.
(S34) The control server 100 acquires the information regarding the user A who has performed the operation, the operation content, an attribute of the data d2, and a storage destination folder, included in the notification in step S33. The control server 100 determines to start a workflow of sharing processing, in other words, data movement between cloud services, based on the acquired information and the action DB 121. As described above, information regarding a moving destination cloud service and a folder name corresponding to the content of the data operation is held in the storage unit 120 in advance.
(S35) The control server 100 confirms setting of the policy information of the shared folder 712 provided by the moving destination cloud service C2, in other words, the cloud service 720.
(S36) The control server 100 evaluates a policy by comparing the policy information for the data d2 registered in the data usage policy 126 and the policy information of the shared folder 712. Specifically, the control server 100 confirms whether or not an accessible user of the data d2 in the data usage policy 126 coincides with an accessible user of the shared folder 712.
(S37) The control server 100 determines whether or not the policy information for the data d2 matches the policy information for the shared folder 712, through the confirmation in step S36.

In a case where the pieces of policy information match, the control server 100 instructs the client device 200 to move the data d2 from the cloud service 620 to the cloud service 720 and proceeds the processing to step S41.

In a case where the pieces of policy information do not match, the control server 100 instructs the client device 400 used by the user B to display an access policy change request of the shared folder 712 and proceeds the processing to step S38.

For example, in a case where the accessible user of the data d2 in the data usage policy 126 coincides with the accessible user of the shared folder 712, the both pieces of policy information match, and in a case where the accessible users do not coincide, the both pieces of policy information do not match. However, in a case where the accessible user of the shared folder 712 is a subset of the accessible user of the data d2 in the data usage policy 126, the control server 100 may determine that the both pieces of policy information match, and otherwise, the control server 100 may determine that the both pieces of policy information do not match.
(S38) When receiving the instruction of the control server 100, the client device 400 displays an access policy change request screen for the shared folder 712. The change request screen is displayed, for example, in the operation screen 421 of the cloud service 720. The change request screen may include an instruction indicating how to change the policy, in other words, an accessible user to be reduced. For example, the user B operates the operation screen 421 and changes the access policy of the shared folder 712. The user B can make an input indicating rejection to the change of the access policy of the shared folder 712, from the change request screen.
(S39) The client device 400 notifies the control server 100 of a change result of the shared folder 712 by the user B.
(S40) The control server 100 determines whether or not the access policy setting of the shared folder 712 has been changed so as to match the policy information for the data d2.

In a case where the setting has been changed, the control server 100 instructs the client device 200 to move the data d2 from the cloud service 620 to the cloud service 720 and proceeds the processing to step S41. In a case where the setting change has not been performed, the processing proceeds to step S42.
(S41) When receiving the instruction of the control server 100, the client device 200 downloads the data d2 from the shared folder 612. The client device 200 uploads the data d2 to the shared folder 712. Then, the client device 200 ends the processing.
(S42) The control server 100 rejects to move the data d2 from the cloud service 620 to the cloud service 720. For example, the control server 100 may transmit the instruction to display indicating that the movement of the data d2 is rejected to the client device 200. Then, the control server 100 ends the processing.

After the data d2 has been moved to the shared folder 712, a user who can access the shared folder 712 may be changed. Next, an example of such processing for the policy setting change of the shared folder 712 after the data movement will be described.

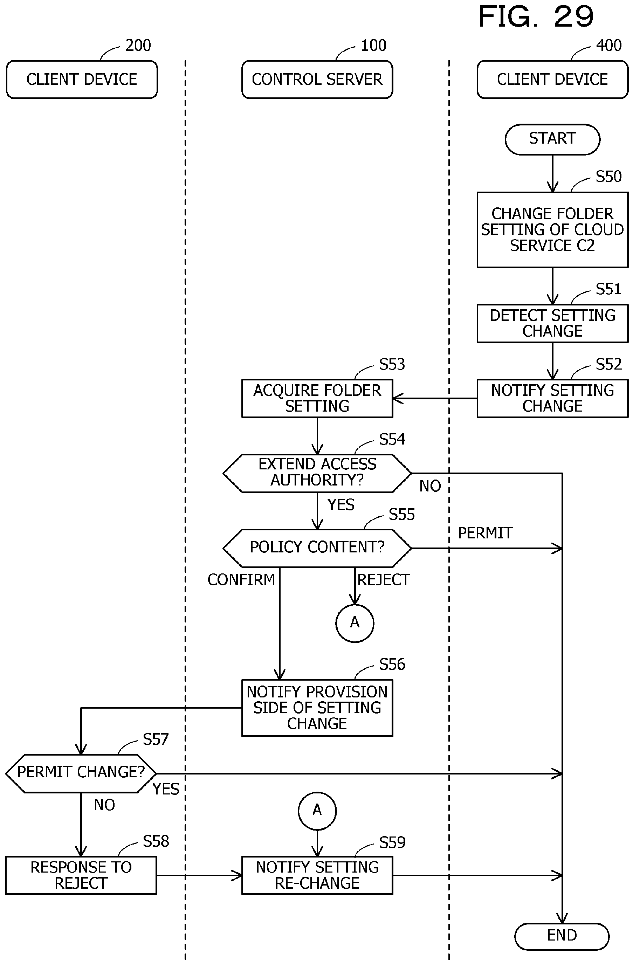

FIG. 29 is a flowchart illustrating a processing example for a policy setting change.

The following processing is executed after step S41 is executed.
(S50) The client device 400 changes setting of a user who can access the shared folder 712 of the cloud service C2, in other words, the cloud service 720, according to the operation by the user B. By changing the setting, for example, the number of users who can access the shared folder 712 increases or decreases.
(S51) The client device 400 detects the setting change in step S50, by periodically monitoring the access policy set to the shared folder 712.
(S52) The client device 400 notifies the control server 100 of the detected setting change.
(S53) When receiving the notification in step S52 from the client device 400, the control server 100 acquires the setting of the shared folder 712 from the cloud service 720.
(S54) The control server 100 determines whether or not an access authority to the shared folder 712 is extended. Here, extending the access authority means that the number of users who can access the shared folder 712 has been increased, in other words, the access limitation is relaxed. In a case where the access authority to the shared folder 712 is extended, the processing proceeds to step S55. In a case where the access authority to the shared folder 712 is not extended, the control server 100 permits the policy setting change of the shared folder 712 and ends the processing. A case where the access authority is not extended is a case where the number of accessible users is reduced, in other words, a case where the access limitation is strengthened.
(S55) The control server 100 refers to the data usage policy 126 and determines whether or not confirmation at the time of policy change of the moving destination folder is required, for the data d2 that has been moved to the shared folder 712. In a case where the confirmation is required, the processing proceeds to step S56. In a case where the confirmation is not required and rejection is constantly made, the processing proceeds to step S59. In a case where the confirmation is not required and permission is constantly made, the control server 100 permits the policy setting change for the shared folder 712 and ends the processing.
(S56) The control server 100 notifies the client device 200 that is a provision side of the data d2 of the setting change of the shared folder 712.
(S57) The client device 200 displays a setting change notification screen. For example, the client device 200 may display the notification screen in the operation screen 221 of the cloud service 620. The client device 200 receives an input indicating whether or not to permit the setting change by the user A with the notification screen. The client device 200 determines whether or not the input indicating that the setting change is permitted is received. In a case where the input indicating that the setting change is permitted is received, the processing ends. In a case where the input indicating that the setting change is not permitted is received, the processing proceeds to step S58. Note that, in a case where the input indicating that the setting change is permitted is received, the client device 200 may respond to the control server 100 to permit the setting change. In a case of receiving the response to permit the setting change, the control server 100 permits the setting change for the shared folder 712 and ends the processing.
(S58) The client device 200 responds to the control server 100 to reject the setting change for the shared folder 712.
(S59) The control server 100 instructs the client device 400 to display a screen for notifying a re-change of the access policy setting of the shared folder 712. Then, the control server 100 ends the processing. The screen may include, for example, a message notifying that the setting of the accessible user is restored to that before the setting change in step S50 or the like. The client device 400 displays the screen notifying the re-change of the access policy setting of the shared folder 712 in response to the instruction of the control server 100 and prompts to re-change the setting by the user B.

In this way, the control server 100 can assist sharing of the data d2 between the cloud services 620 and 720 and can perform control so as to appropriately protect the data d2 with the access policy set in the moving source in the moving destination cloud service 720.

By the way, there is a demand to complete exchange of digital data such as documents between organizations such as companies only using data, without using papers. Therefore, as described above, there is a case where predetermined processing, for example, for adding an electronic signature, moving data to the cloud service 720, or the like, is executed on the data stored in the cloud service 620.

In this case, for example, the user A performs a series of operations, for example, for causing the client device 200 to execute the processing after downloading data from the cloud service 620 that stores the data to the client device 200. Moreover, the user A uploads the processed data to the cloud service 620 or the cloud service 720 again.

However, if the number of operation procedures of the user is large in this way, this requires time and effort of the user, and there is a possibility that processing that should be executed on the data is omitted by the user or the processing is not appropriately executed. Furthermore, efficiency of the usage of the cloud services 620 and 720 by the user is not sufficiently enhanced.

Therefore, the control server 100 causes the client device 200 to execute the processing that should be executed on the data, according to the content of the data operation on the data stored in the cloud service 620 received from the client device 200. As a result, the processing such as a signature that should be executed on the data can be appropriately executed by the client device 200, without depending on the operation of the user A. Furthermore, it is possible to reduce the number of user's operation procedures associated with the execution of the processing and to reduce the user's operation load. In this way, it is possible to efficiently use the cloud services 620 and 720.

Furthermore, for example, it can be said that processing according to the second embodiment includes processing in which, when an information processing system that provides a data management function is used, software that operates in a first information processing device detects operation information for the first information processing device by a user from the first information processing device operated by the user, the detected operation information is notified to a second information processing device that relays between the first information processing device and the information processing system and adds a digital signature to data, and the first information processing device and the second information processing device automatically add a signature to the data in cooperation.

As a result, it is possible to appropriately execute the processing for adding the digital signature to the data managed by the information processing system. The cloud system 600 is an example of the information processing system. Each of the client devices 200, 200a, 400, and 400a is an example of the first information processing device. The control server 100 is an example of the second information processing device.

The control server 100 and the client device 200 according to the second embodiment execute, for example, the following processing. The client devices 200a, 400, and 400a execute processing similar to that of the client device 200.

The client device 200 detects a first data operation for the cloud service 620 executed by the cloud system 600 and notifies the control server 100 of content of the first data operation.

The control server 100 determines first processing on target data of the first data operation, based on the notified content of the first data operation and instructs the client device 200 to execute the first processing.

When instructed to execute the first processing, the client device 200 executes the first processing on the data.

As a result, it is possible to appropriately execute the processing such as signing the data stored in the cloud service 620 while reducing the operation by the user.

For example, the content of the first data operation includes information regarding a data storage destination and an attribute of the data provided by the cloud service 620.

The control server 100 determines the first processing for the first data operation, based on management information indicating a correspondence relationship between processing to be executed and the information regarding the data storage destination and the attribute of the data.

As a result, it is possible for the control server 100 to efficiently determine various types of processing triggered by the user's data operation and to issue an instruction to the client device 200. The action DB 121 described above is an example of the management information. Furthermore, as indicated in the action DB 121, the management information may further include information indicating an order of request destination users of the approval workflow with respect to the information regarding the data storage destination, the attribute of the data, and information regarding the user who has performed the operation. In this case, the control server 100 controls a request order of the approval in the workflow so that the approval by each user is made the order. As a result, the workflow can be efficiently used for the data stored in the cloud service 620.

For example, the first processing is processing for adding signature data to data.

When instructed to execute the first processing, the client device 200 acquires data (for example, data d1) from the cloud service 620 and transmits data (for example, data d2) to which the signature data has been added to the cloud service 620.

As a result, it is possible to reduce the operation by the user and to more efficiently use the cloud service 620. Furthermore, it is possible to add a signature to the data in a user's local environment without transferring the data to be signed to the control server 100. Note that addition of a signature in the user's local environment is referred to as a local signature. On the other hand, addition of a signature in a remote environment such as a cloud system is referred to as a remote signature. Moreover, the signature data may be an electronic signature of an individual user, or may be data such that a third party who is highly reliable proves that an organization that has created data is the organization X, such as the e-seal.

The client device 200 displays a second screen for receiving an input to start to add the signature data by the user, in a first screen that receives an input of a data operation on the cloud service 620. When receiving the input, the client device 200 executes processing for acquiring the data from the cloud service 620 and adding the signature data to the data.

As a result, it is possible to input to start to add the signature data with feeling of using the cloud service 620 and to maintain convenience of the user.

The control server 100 determines a format of the signature data according to the content of the first data operation and instructs the determined format of the signature data to the client device 200.

As a result, it is possible to selectively use the organization signature and the signature by the reliable certification authority. For example, by registering the signature setting table 123 in the control server 100 according to a user's request in advance, it is possible to use a signature format according to the user's request for the first data operation.

The client device 200 notifies the control server 100 of that the addition of the signature data to the data has been completed. The control server 100 saves a history of the signature data addition to the data in the storage unit 120.

As a result, the user can perform ex-post verification based on the saved history that the signature data is properly added to the data. Note that the signature history table 122 is an example of the history saved in the storage unit 120.

When detecting that a notification indicating that the addition of the signature data has been completed is not received within a predetermined time from a time when the execution of the first processing is instructed, based on the history stored in the storage unit 120, the control server 100 inquires the client device 200 about whether or not the addition of the signature data has been completed.

In this way, the control server 100 may verify that the signature data is properly added by the client device 200, based on the history saved in the storage unit 120. As a result, it is possible to appropriately add the signature data to the data.

Furthermore, the first processing may be processing for moving or copying the data stored in the cloud service 620 to the cloud service 720 executed by the cloud system 700.

In this case, when instructed to execute the first processing, the client device 200 acquires the data from the cloud service 620 and transmits the data to the cloud service 720.

As a result, the operation load of the user can be reduced. Furthermore, the data stored in the cloud service 620 can be efficiently moved to the cloud service 720. Note that it can be said that the processing for moving or copying the data stored in the cloud service 620 to the cloud service 720 is, for example, processing for sharing the data between the cloud services 620 and 720.

Furthermore, when notified an operation for moving or copying the data stored by the cloud service 620 to the folder (for example, shared folder 712) of the cloud service 720 as the first data operation from the client device 200, the control server 100 determines whether or not setting information of the folder corresponds to at least one of a policy according to an organization or a user that owns the data or a policy according to the data. The setting information is policy information indicating a user who is permitted to access the folder. In a case where the determination result is affirmative, the control server 100 permits the client device 200 to move or copy the data to the folder. In a case where the determination result is negative, the control server 100 prevents the movement or copy of the data to the folder by the client device 200.

As a result, when the data is moved or copied between the cloud services, it is possible to perform control so that the data that has moved to the data moving destination is used under appropriate access limitation. Information regarding the access limitation is, for example, information indicating a user who has permitted to access.

For example, it is considered that the control server 100 acquires setting content of the access limitation that should be satisfied for data to be moved from a user of the data moving source in advance. Then, the control server 100 determines whether or not to permit the movement of the data according to whether or not the content of the access limitation of the data moving destination satisfies the setting content of the access limitation that has been acquired in advance. In this way, it is possible to perform control so that the data that has been moved to the data moving destination is used by only another user expected by the user of the data moving source.

After the data has been transmitted to the cloud service 720 by the client device 200, the client device 400 detects a change in the access limitation of the folder that is the data storage destination in the cloud service 720. Then, the client device 400 notifies the control server 100 of the change in the access limitation.

The control server 100 determines whether or not to permit the change in the access limitation of the folder, based on the information regarding the access limitation of the folder before being changed and the information regarding the access limitation of the folder that has been changed. When determining not to permit the change, the control server 100 instructs the client device 400 to display a third screen for instructing to re-change the access limitation.

As a result, it is possible to perform control so that the data transmitted to the data moving destination is used under appropriate access limitation. For example, it is considered that the control server 100 determines whether or not to permit the change in the access limitation according to whether or not a user who is permitted to access the folder is added, reduced, or the like. Furthermore, in a case where the user who is permitted to access is added, the control server 100 may further confirm whether or not to permit the change in the access limitation for the user of the data moving source.

Note that the first processing may include the processing for adding the signature data to the data before moving or copying the data. As a result, it is possible to appropriately add the signature data to the data before being moved or copied.

Furthermore, when instructed to execute the first processing, the client device 200 executes the authentication processing on the cloud service 620, acquires the data from the cloud service 620 when the authentication processing is completed, and executes the first processing on the data.

As a result, it is not necessary to force the user to perform the operation of the authentication processing for acquiring the data by the client device 200, and it is possible to reduce the user's operation load. Therefore, the user can more efficiently use the cloud service 620.

The control server 100 instructs the authentication protocol used for the authentication processing of the cloud service 620 to the client device 200.

As a result, it is possible to appropriately execute the authentication processing on the cloud service 620 by the client device 200. For example, the control server 100 provides a list of the authentication protocols for the accessible cloud service 620 to the client device 200 in advance, as in the adapter table 125. Furthermore, the client device 200 includes a program module that executes the authentication protocol in advance. Therefore, even if the program such as the agent of the client device 200 is not modified, the client device 200 can execute the authentication processing with the cloud service 620 using an appropriate authentication protocol.

Note that the information processing according to the first embodiment may be implemented by causing the processing unit 12 to execute a program. Furthermore, the information processing according to the second embodiment can be implemented by causing the CPU 101 to execute a program. The program can be recorded in the computer-readable recording medium 113.

For example, the program can be distributed by distributing the recording medium 113 in which the program is recorded. Furthermore, the program may be stored in another computer and distributed via a network. For example, a computer may store (install) the program, which is recorded in the recording medium 113 or received from another computer, in a storage device such as the RAM 102 or the HDD 103, read the program from the storage device, and execute the program.

The above description merely indicates the principle of the present invention. Moreover, numerous modifications and variations are able to be made by those skilled in the art, and the present invention is not limited to the above-described or illustrated exact configuration and application example, and all corresponding modifications and equivalents are regarded to fall within the scope of the present invention by appended claims and equivalents thereof.

### REFERENCE SIGNS LIST

10, 20 information processing device
11, 21 storage unit
12, 22 processing unit
13, 23 communication unit
30 information processing system
31 cloud service
40 network
Didata
S1, S2, S3, S4 step

## Claims

1. A control method to execute a process comprising:
when using an information processing system that provides data operation function by a first information processing device controlled by a user, detecting operation information by the user to the first information processing device by software that operates in the information processing system;
notifying the detected operation information to a second information processing device that intermediates between the first information processing device and the information processing system, and applies a digital signature to data;
applying automatically a digital signature to the data cooperated by the first information processing device and the second information processing device.

2. A control method wherein
a first information processing device detects a first data operation for a cloud service executed by an information processing system and notifies a second information processing device of content of the first data operation,
the second information processing device determines first processing of data that is a target of the first data operation based on the notified content of the first data operation and instructs the first information processing device to execute the first processing, and
when instructed to execute the first processing, the first information processing device executes the first processing on the data.

3. The control method according to claim 2, wherein
the content of the first data operation includes information regarding a storage destination of the data and an attribute of the data, provided by the cloud service, and
the second information processing device determines the first processing of the first data operation, based on management information that indicates a correspondence relationship between processing to be executed and the information regarding the storage destination of the data and the attribute of the data.

4. The control method according to claim 2, wherein
the first processing is processing of adding signature data to the data, and
the first information processing device acquires the data from the cloud service when instructed to execute the first processing and transmits the data to which the signature data has been added to the cloud service.

5. The control method according to claim 4, wherein
the first information processing device executes processing of displaying a second screen that receives an input to start to add the signature data by a user in a first screen that receives an input of a data operation for the cloud service, acquiring the data from the cloud service when receiving the input, and adding the signature data to the data.

6. The control method according to claim 4, wherein
the second information processing device determines a format of the signature data according to the content of the first data operation and instructs the determined format of the signature data to the first information processing device.

7. The control method according to claim 4, wherein
the first information processing device notifies the second information processing device of that the addition of the signature data to the data has been completed, and
the second information processing device saves a history of the addition of the signature data to the data in a storage unit.

8. The control method according to claim 7, wherein
when detecting that a notification that indicates that the addition of the signature data has been completed is not received within a predetermined time from a time when instructing to execute the first processing, based on the history stored in the storage unit,
the second information processing device inquires the first information processing device whether or not the addition of the signature data has been completed.

9. The control method according to claim 2, wherein
the first processing is processing of moving or copying the data to another cloud service executed by another information processing system, and
when instructed to execute the first processing, the first information processing device acquires the data from the cloud service and transmits the data to the another cloud service.

10. The control method according to claim 9, wherein
the second information processing device,
when an operation of moving or copying the data stored by the cloud service to a folder of the another cloud service is notified from the first information processing device as the first data operation, determines whether or not setting information of the folder corresponds to at least one of a policy according to an organization or a user that owns the data or a policy according to the data, and
in a case where a determination result is affirmative, permits to move or copy the data to the folder by the first information processing device, and in a case where the determination result is negative, prevents the movement or copy of the data to the folder by the first information processing device.

11. The control method according to claim 10, wherein
after the data is transmitted to the another cloud service by the first information processing device, a third information processing device detects a change in access limitation of the folder that is a storage destination of the data in the another cloud service and notifies the second information processing device of the change in the access limitation, and
the second information processing device determines whether or not to permit a change in the access limitation of the folder, based on information regarding the access limitation of the folder before being changed and information regarding the access limitation of the folder that has been changed and instructs the third information processing device to display a third screen that instructs to re-change the access limitation when determining not to permit the change.

12. The control method according to claim 9, wherein
the first processing includes processing of adding signature data to the data before moving or copying the data.

13. The control method according to claim 2, wherein
when instructed to execute the first processing, the first information processing device executes authentication processing on the cloud service, acquires the data from the cloud service when the authentication processing has been completed, and executes the first processing on the data.

14. The control method according to claim 13, wherein
the second information processing device instructs an authentication protocol used for the authentication processing to the first information processing device.

15. A non-transitory computer-readable storage medium storing a control program that causes at least one computer to execute a process, the process comprising:
when a content of a first data operation from another information processing device that detects the first data operation for a cloud service executed by an information processing system is notified, determining first processing on data that is a target of the first data operation based on the content of the first data operation; and
instructing the another information processing device to execute the first processing on the data.

16. An information processing device comprising:
a communication unit configured to receive a notification of content of a first data operation from another information processing device that detects the first data operation for a cloud service executed by an information processing system; and
a processing unit configured to determine first processing on data that is a target of the first data operation based on the content of the first data operation and instruct the another information processing device to execute the first processing on the data.
